(19) **Europäisches Patentamt**

**European Patent Office**

**Office européen des brevets**

(11) **EP 1 229 670 B1**

(12) **EUROPÄISCHE PATENTSCHRIFT**

(45) Veröffentlichungstag und Bekanntmachung des Hinweises auf die Patenterteilung:
**07.07.2004 Patentblatt 2004/28**

(51) Int Cl.$^7$: **H04B 7/08**, H04B 7/10

(21) Anmeldenummer: **02001786.9**

(22) Anmeldetag: **25.01.2002**

(54) **Verfahren und Kommunikationsanordnung zum drahtlosen Übermitteln von Informationen**

Communication method and system for wireless data transmission

Procédé et système de communication pour la transmission de données sans fil

(84) Benannte Vertragsstaaten:
**AT BE CH CY DE DK ES FI FR GB GR IE IT LI LU MC NL PT SE TR**

(30) Priorität: **31.01.2001 DE 10104196**

(43) Veröffentlichungstag der Anmeldung:
**07.08.2002 Patentblatt 2002/32**

(73) Patentinhaber: **Siemens Mobile Communications S.p.A.**
**20126 Milano (IT)**

(72) Erfinder:
• **Calabro, Stefano**
**81375 München (DE)**
• **Sebald, Georg**
**81375 München (DE)**

(74) Vertreter: **Heusler, Wolfgang, Dipl.-Ing.**
**v. Bezold & Sozien**
**Patentanwälte**
**Akademiestrasse 7**
**80799 München (DE)**

(56) Entgegenhaltungen:
**EP-A- 1 047 209**

• **CHIZHIK D ET AL: "EFFECT OF ANTENNA SEPARATION ON THE CAPACITY OF BLAST IN CORRELATEDCHANNELS" IEEE COMMUNICATIONS LETTERS, IEEE SERVICE CENTER, PISCATAWAY,US, US, Bd. 4, Nr. 11, November 2000 (2000-11), Seiten 337-339, XP001009009 ISSN: 1089-7798**
• **HONGYA GE ET AL: "Combined adaptive interference cancellation and bootstrap separation of dual polarized signals" SIGNALS, SYSTEMS AND COMPUTERS, 1996. CONFERENCE RECORD OF THE THIRTIETH ASILOMAR CONFERENCE ON PACIFIC GROVE, CA, USA 3-6 NOV. 1996, LOS ALAMITOS, CA, USA,IEEE COMPUT. SOC, US, 3. November 1996 (1996-11-03), Seiten 694-698, XP010231517 ISBN: 0-8186-7646-9**
• **LANKL B ET AL: "CROSS-POLARIZATION INTERFERENCE CANCELLATION IN THE PRESENCE OF DELAY EFFECTS" DIGITAL TECHNOLOGY - SPANNING THE UNIVERSE. PHILADELPHIA, JUNE 12 - 15, 1988, INTERNATIONAL CONFERENCE ON COMMUNICATIONS, NEW YORK, IEEE, US, Bd. 3, 12. Juni 1988 (1988-06-12), Seiten 1355-1361, XP000042186**
• **WINTERS J.H.: 'Onthe Capacity of Radio Communication systems with diversity in a rayleigh Fading environment' JOURNAL ON SELECTED AREAS IN COMMUNICATIONS Bd. 5, Nr. 5, Mai 1987, Seiten 8/1 - 8/8**

EP 1 229 670 B1

**Beschreibung**

Die Erfindung betrifft allgemein ein Verfahren und eine Kommunikationsanordnung zum drahtlosen Übermitteln von Informationen zwischen mehreren Sendeeinrichtungen und mehreren Empfangseinrichtungen über mehrere drahtlose Übertragungskanäle. Die Erfindung bezieht sich speziell auf ein Verfahren und eine Kommunikationsanordnung einer Gattung gemäß dem Oberbegriff des Patentanspruchs 1 bzw. des Patentanspruchs 8, wie sie an sich bekannt ist aus der Veröffentlichung "On the Capacity of Radio Communication Systems with Diversity in a Raleigh Fading Environment" von Jack H. Winters in IEEE Journal on Selected Areas in Communications, 5 (1987), Seiten 871-878.

Die zunehmende Nutzerakzeptanz sowie der technologische Fortschritt bei der Entwicklung neuer Breitbanddienste - z.B. Multimedia-Dienste wie "Video on Demand" - führen zu einem zunehmenden Bedarf an breitbandigen Übertragungsressourcen bei bereits bestehenden, d.h. installierten Kommunikationsnetzen. Insbesondere die Technik und Architektur des Teilnehmeranschluss- bzw. Teilnehmerzugangsnetzes - auch als ACCESS-Network bezeichnet - werden durch die veränderten Marktanforderungen, Liberalisierung des Telekommunikationsmarktes und dessen technologischen Fortschritte beeinflusst. Um die breitbandigen Dienste effektiv und wirtschaftlich den Teilnehmern bereitzustellen, ist ein die erforderlichen Übertragungsressourcen bereitstellender Teilnehmeranschluss zum Anschluss der Teilnehmer an das übergeordnete, breitbandige Kommunikationsnetz erforderlich.

In aktuellen Teilnehmeranschlussnetzen ist der Einsatz von drahtlosen, auf Funkkanälen basierenden Kommunikationsnetzen, insbesondere von Punkt-zu-Multipunkt und Punkt-zu-Punkt-Funk-Zubringernetze bekannt - auch als "Radio in the Local Loop" bzw. "RLL" bezeichnet.

Bei drahtlosen, insbesondere im Teilnehmeranschlussbereich angeordneten Kommunikationsnetzen werden hohe Anforderungen an die spektrale Effizienz der Funkübertragungssysteme gestellt. In der Druckschrift "Cross-Polarisation Interference Cancellation in the Presence of Delay Effects", B. Lankl, J.A. Nossek und G. Sebald, Proc. ICC 1988, Philadelphia, pp. 41.4.1 - 41.4.7 ist ein Beispiel für eine verbesserte, effiziente Nutzung von durch drahtlose Kommunikationsnetze bereitgestellten Übertragungsressourcen beschrieben. In der angegebenen Druckschrift ist ein Punkt-zu-Punkt Richtfunksystem offenbart, bei dem beide orthogonale Polarisationsebenen eines Trägersignals gleichzeitig zur Informationsübermittlung verwendet werden. Durch die Ausnutzung der orthogonalen Polarisationsebenen eines Funkkanals - auch als Cochannel-Betrieb bezeichnet - wird ein Bandbreitengewinn um den Faktor 2 erreicht. Bei der Informationsübermittlung mittels Cochannel-Betrieb treten bedingt durch die gegenseitige Beeinflussung der Polarisationsebenen Interferenzstörungen auf - auch als Cross-Polarisation Interference" oder "Cochannel Interference" bezeichnet. Ursachen solcher Interferenzstörungen sind beispielsweise ungünstige klimatische Verhältnisse wie Regen als auch Vielwegeausbreitung durch Reflexionen. Die durch Cochannel-Interferenzen verursachten Störsignale weisen im Vergleich zu den empfangenen Sende- bzw. Nutzsignalen bedingt durch unterschiedliche Übertragungsstrecken Laufzeitunterschiede bzw. Phasenverschiebungen auf, wobei basierend auf diesen Phasenverschiebungen auf der Empfängerseite durch Verknüpfungen der empfangenen Signale geeignete Kompensationssignale erzeugt werden, durch welche die Störsignale kompensiert werden.

Derartige Kompensationsverfahren sind dem Fachmann bekannt und werden auch als "Cross-Polar Interference Canceller, XPIC" bezeichnet. Die Übertragungsbedingungen bei der Informationsübermittlung mittels Cochannel-Betrieb sowie die durch Cochannel-Betrieb auftretenden Störungen sind in der oben angegebenen Druckschrift mit Hilfe eines vereinfachten Kanalmodells erläutert. Des Weiteren ist beispielhaft eine schaltungstechnische Anordnung zur Realisierung eines im Rahmen eines Cochannel-Betriebes eingesetzten Demodulators mit integriertem XPIC-Kompensator angegeben.

Nachteilig ist, dass der oben beschriebene Cochannel-Betrieb auf die Nutzung der horizontalen und vertikalen Polarisationsebenen eines Funksignals beschränkt ist.

Ein anderer Ansatz, der sich für eine Mehrfachausnutzung eines Frequenzbandes in gleicher Polarisation eignet, ist bekannt aus der eingangs erwähnten Veröffentlichung von Jack H. Winters. Hierbei wird das zwischen den Sendeeinrichtungen und den Empfangseinrichtungen wirksame Übertragungssystem, welches an jeder Empfangseinrichtung dem jeweils zugeordneten Sendesignal Anteile der anderen Sendesignale als Störsignale überlagert, als eine Übertragungsmatrix mit komplexen Koeffizienten begriffen, die dem Zufall unterliegen. Zur Kompensation der Störsignale werden die Empfangssignale dann ihrerseits wieder nach einer bestimmten Vorschrift überlagert, die sich durch komplexe Koeffizienten einer Kompensationsmatrix beschreiben lässt. Die Kompensation mittels einer solchen Kompensationsmatrix gelingt aber nicht für beliebige Phasenlagen der an den Empfangseinrichtungen empfangenen Störsignale sondern nur dann, wenn die Phasen der Störsignale innerhalb eines vorgegebenen Bereichs liegen.

Um die Effizienz der empfangsseitigen Störsignal-Kompensation zu erhöhen, schreibt die genannte Winters-Veröffentlichung vor, die Sendesignale vor ihrer Aussendung einer geeigneten Vorverarbeitung zu unterwerfen, bestehend aus einer gegenseitigen Verknüpfung dieser Signale gemäß einer Vorverarbeitungsmatrix, die jedoch aufwändige Schaltungsmaßnahmen erfordert.

Der Erfindung liegt allgemein die Aufgabe zugrunde, die Bandbreiteneffizienz bzw. die Ausnutzung der durch drahtlose Kommunikationsnetze bereitgestellten, drahtlosen Übertragungsressourcen weiter zu verbessern. Angesichts des vorstehend diskutierten Standes der Technik besteht eine spezielle Ausfgabe der Erfindung darin, den Aufwand für die Kompensation der Störsignale, die bei drahtloser Übertragung mehrerer Sendesignale wenigstens annähernd gleicher Trägerfrequenz und Polarisation durch Übersprechen entstehen, zu vermindern.

Diese Aufgaben werden erfindungsgemäß gelöst durch die im Patenanspruch 1 beschriebenen Verfahrensmerkmale und auch durch die im Patentanspruch 8 beschriebenen Merkmale einer Kommunikationsanordnung.

Bei dem erfindungsgemäßen Verfahren werden Informationen von mehreren Sendeeinrichtungen an mehere Empfnagseinrichtungen über mehrere unabhängige, drahtlose Übertragungskanäle mit Hilfe von wenigstens annähernd die gleiche Trägerfrequenz und wenigstens annähernd die gleiche Polarisationsebene aufweisenden Sendesignalen zugeordnet übermittelt, wobei eine Besonderheit der Erfindung-darin besteht, dass die Sendesignale sendeseitig nicht miteinander verknüpft werden. An jeder Empfangseinrichtung werden zusammen mit dem Sendesignal des jeweils zugeordneten Übertragungskanals auch die Sendesignale der jeweils anderen Übertragungskanäle als Störsignale empfangen, mit zum Teil unterschiedlichen Phasenlagen, entsprechend den Koeffizienten einer Übertragungsmatrix, welche die Kanal-Übertragungsfunktionen zwischen jeder Sendeeinrichtung und den verschiedenen Empfangseinrichtungen darstellen. Die empfangenen Signale werden mit Hilfe eines durch eine komplex gewichtende Kompensationsmatrix definierten Kompensationsverfahrens hinsichtlich der Phasenlage derart beeinflusst und anschließend zu Nutzsignalen überlagert, dass die jeweils in einem Übertragungskanal auftretenden Störsignale kompensiert oder reduziert werden, wobei im Rahmen des Kompensationsverfahrens nur die empfangenen Störsignale mit in einem vorgegebenen Phasenbereich angeordneten Phasenlagen kompensiert, bzw. reduziert werden können. Der wesentliche Aspekt des erfindungsgemäßen Verfahrens besteht darin, dass die geometrische Anordnung der Übertragungskanäle derart gewählt ist, dass die Störsignale mit im vorgegebenen Phasenbereich angeordneten Phasenlagen empfangen werden. Es wird also z.B. durch richtiges Aufstellen der Antennen erreicht, dass die Signale auf der Empfangsseite mit Phasen eintreffen, die in dem durch das Kompensationsverfahren vorgegebenen Phasenbereich liegen. Dies ermöglicht die Störsignal-Kompensation mit maximaler Effizienz ohne die Notwendigkeit einer sendeseitigen Verknüpfung der Sendesignale.

In der Druckschrift EP-A-1047209 ist erwähnt, dass bei Kanälen gleicher Frequenz und Polarisation sowohl die Sendeantennen als auch die Empfangsantennen weit genug auseinander liegen sollten, z.B. entsprechend der halben Wellenlänge der Trägerfrequenz, um die Trajektorien zwischen Sende- und Empfangseinrichtungen unterschiedlich zu machen. Eine spezielle Anweisung, die Geometrie konkret so zu wählen, dass auf eine Vorverknüpfung der Sendesignale verzichtet werden kann, ist aus dieser Druckschrift jedoch nicht herleitbar. Vielmehr wird dort ein ganz anderer Weg vorgeschlagen, nämlich ein Aufspalten der Sendesignale und deren Verarbeitung in Subbänder, so dass letztlich kein reines Ausbreitungs-Multiplex (Space Division Multiplex) sondern ein gemischtes Ausbreitungs- und Frequenz-Multiplex entsteht

Mit dem erfindungsgemäßen Verfahren gelingt es zum einen, durch Verwendung von wenigstens annähernd die gleiche Übertragungsfrequenz und wenigstens annähernd die gleiche Polarisationsebene aufweisenden Trägersignalen zur Informationsübermittlung in einem Funk-System eine zusätzliche spektrale Effizienz bzw. Bandbreiteneffizienz zu erreichen, insbesondere bei Punkt-zu-Punkt-Richtfunksystemen. Gleichzeitig ergibt sich der Vorteil, dass keine sendeseitige Signalvorverarbeitung bzw. Signalverkopplung erforderlich ist, die nur mit erhöhtem technischem Aufwand zu realisieren wäre - beispielsweise mittels hochlinearer RF-Signalverarbeitung mit im hohem Back-Off arbeitenden Leistungsverstärkern sowie zusätzliche Verkabelungen. Auf der Empfängerseite können bereits bewährte bzw. erprobte (adaptive) Kompensationsverfahren eingesetzt werden - wie beispielsweise XPIC -, welche vorteilhafterweise bereits in hochintegrierten Schaltungsanordnungen - z.B. ASICs - realisiert sind.

Gemäß einer vorteilhaften Weiterbildung des erfindungsgemäßen Verfahrens ist die geometrische Anordnung der Übertragungskanäle derart gewählt, dass mit Hilfe des Kompensationsverfahrens die Phasenlagen der empfangenen Signale derart beeinflusst werden, dass die ausgehend von einem Übertragungskanal jeweils in den anderen Übertragungskanälen als Störsignale empfangenen Sendesignale mit dem über den jeweiligen Übertragungskanal empfangenen Empfangssignal phasengerecht summiert werden und somit eine Leistungsverstärkung der Nutzsignale erreicht wird - Anspruch 2.

In besonderer Ausführungsform werden über jede der Sendeeinrichtungen jeweils zwei Sendesignale mit jeweils unterschiedlicher orthogonaler Polarisationsebene ausgesendet und über die Empfangseinrichtungen empfangen und weiterverarbeitet - Anspruch 5. Durch die Nutzung der horizontalen und vertikalen Polarisationsebenen der Sendesignale zur Informationsübermittlung wird eine zusätzlich verdoppelte Ausnutzung der durch die drahtlosen Übertragungskanäle bereitgestellten Übertragungsressourcen erreicht.

Gemäß einer weiteren vorteilhaften Ausgestaltung werden die empfangenen Signale vor der Durchführung des Kompensationsverfahrens hinsichtlich der Phasenlage jeweils um einen vorgegebenen, empfangssignal-individuellen Wert beeinflusst.

Anschließend werden die beeinflussten Signale den jeweils anderen Empfangssignalen überlagert - Anspruch 7. Durch die Einführung einer "Vorab-Kompensation" vor der Durchführung des eigentlichen Kompensationsverfahrens zur Kompensation der in den Empfangssignalen enthaltenen Störsignale wird eine Beseitigung bzw. Bereinigung der gröbsten Störsignale erreicht. Treten während des Betriebes zusätzliche Störungen auf - beispielsweise durch klimatische Bedingungen verursachte Laufzeitunterschiede der einzelnen Sendesignale - werden diese durch das nachfolgende Kompensationsverfahren kompensiert.

Weitere vorteilhafte Ausgestaltungen des erfindungsgemäßen Verfahrens sowie eine zugehörige Kommunikationsanordnung und deren besondere Ausgestaltungen sind den weiteren Ansprüchen zu entnehmen.

Im Folgenden wird das erfindungsgemäße Verfahren mit Hilfe mehrerer Zeichnungen näher erläutert. Dabei zeigen

FIG 1 ein die Basis des erfindungsgemäßen Verfahrens repräsentierendes Systemkonzept bzw. ein Kanalmodell,

FIG 2 eine Anordnungsvariante zur optimalen Anordnung der Sende- und Empfangseinrichtungen für den Fall n = 2,

FIG 3 in einem Diagramm den für eine optimierte Leistungsverstärkung der Empfangssignale erforderlichen optimalen Abstand der Sende- und Empfangseinrichtungen in Abhängigkeit von der Entfernung und der Trägerfrequenz,

FIG 4 einen Detailausschnitt des in Fig. 3 dargestellten Diagramms,

FIG 5 mögliche Toleranzen bei der Anordnung von Sendeund Empfangseinrichtungen mit optimalen Abstand für den Fall n = 2,

FIG 6 in einem Diagramm die Abhängigkeit der Leistungsverstärkung der empfangenen Signale von der geometrischen Anordnung der Sende- und Empfangseinrichtungen ,

FIG 7 eine beispielhafte Anordnung von jeweils 3 Sendeund Empfangseinrichtungen mit für die Kompensation von Störsignalen optimierten Abstand,

FIG 8 in einem Blockschaltbild ein schaltungstechnisches Anordnungsbeispiel mit im optimalen Abstand angeordneten Sende- und Empfangseinrichtungen für den Fall n = 2,

FIG 9 eine vorteilhafte Weiterbildung der in FIG 7 und 8 dargestellten Anordnungen,

FIG 10 eine weitere vorteilhafte Weiterbildung mit einem Vorkompensator

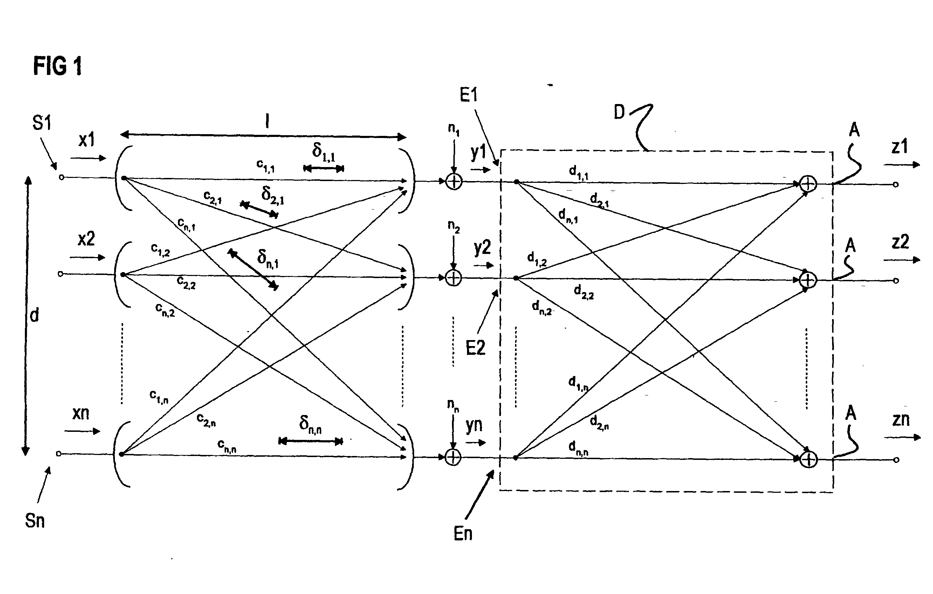

FIG 1 zeigt in einem Blockschaltbild ein allgemeines auf "flachen Kanälen" ohne Mehrwegeausbreitung basierendes Systemkonzept bzw. Kanalmodell, welches die Basis des erfindungsgemäßen Verfahren bildet. Das Blockschaltbild zeigt n Sendeeinrichtungen S1...n sowie n Empfangseinrichtungen E1...n, durch welche jeweils auf Sichtverbindung - line of sight - ausgerichtete Übertragungskanäle gebildet werden. In diesem Ausführungsbeispiel weist jeweils jedes zugeordnete Paar von Sende- und Empfangseinrichtung $S_i$, $E_i$ ($1 <= i <= n$) einen Abstand 1 auf. Erfindungsgemäß sind die Sende- und Empfangseinrichtungen S1...n, E1...n räumlich nah beieinander angeordnet - d.h. der Abstand d der beiden äußeren Sende- und Empfangseinrichtungspaare S1,E1, Sn,En ist klein im Vergleich zum Abstand 1 -, so dass jede Sendeantenne S1...n einen Ausgangspunkt und jede Empfangsantenne E1...n einen Endpunkt mehrerer Übertragungskanäle repräsentiert. Die einzelnen Übertragungskanäle weisen jeweils kanalindividuelle Übertragungseigenschaften auf, wobei in FIG 1 die Übertragungsfunktionen der einzelnen Übertragungskanäle durch die Indizes c11...cnn gekennzeichnet sind.

Von den Sendeeinrichtungen S1...n werden jeweils Sendesignale x1...n mit annähernd der gleichen Trägerfrequenz - beispielsweise 38 GHz - und mit der selben Polarisation (d.h. beispielsweise auf der horizontalen oder vertikalen Polarisationsebene) über die jeweiligen Übertragungskanäle ausgesendet. Bedingt durch die räumlich nahe Anordnung der Sende- und Empfangseinrichtungen S1...n, E1...n - d << 1 - wird ein von einer Sendeeinrichtung S1...n ausgesendetes Sendesignal x1...n von allen Empfangseinrichtungen E1...n empfangen. Die ausgesendeten Sendesignale x1...n werden an den Empfangseinrichtungen E1...n empfangen, wobei die am Ausgang der Empfangseinrichtungen E1...n anliegenden Signale jeweils zusätzlich mit einem durch die Übertragungseigenschaften der Übertragungskanäle verursachtes Rauschsignal n1...n überlagert sind. Vereinfacht sei zunächst angenommen, dass der Übertragungskanal zwischen der i-ten Sendeeinrichtung Si und der j-ten Empfangseinrichtung Ej keine frequenzselektiven Übertragungseigenschaften aufweist und dass das überlagerte Rauschsignal n1...n als additives weißes Gaussches Rauschen eine spektrale Leistungsverteilung von $N_0/2$ aufweist.

Im folgenden werden die an den Empfangseinrichtungen E1...n empfangenen und mit weißen Rauschen n1...n überlagerten Signale als Empfangssignale y1...n bezeichnet.

Die von der i-ten Sendeeinrichtung Si ausgesendeten und von der j-ten Empfangseinrichtung Ej empfangenen Signale treten an der j-ten Empfangseinrichtung als Störsignal auf. Die Empfangssignale y1...n werden einer den Empfangseinrichtungen E1...n zugeordneten Kompensationseinrichtung D zugeführt, durch welche die in den Empfangssignalen y1...n enthaltenen Störsignale kompensiert werden. Dem Fachmann sind derartige Kompensationsverfahren - welche zum Teil auch als adaptive Kompensationsverfahren ausgebildet sind - zur empfangsseitigen Kompensation von Störsignalen bekannt - z.B. XPIC. Die auf diese Art und Weise von Störsignalen bereinigten Signale z1...n - im folgenden auch als Nutzsignale bezeichnet - liegen an entsprechenden Ausgängen A1...n der Kompensationseinrichtung D an.

Hinsichtlich des in FIG 1 dargestellten Kanalmodells gilt zwischen den Sendesignalen x1...n und den Empfangssignalen y1...n folgende mathematische Beziehung:

$$y(t) = Cx(t - \tau) + n(t) \tag{1}$$

wobei

$$y(t) = [y_1(t)y_2(t)\cdots y_n(t)]^T \tag{2}$$

$$C = \begin{bmatrix} c_{1,1} & c_{1,2} & \cdots & c_{1,n} \\ c_{2,1} & c_{2,2} & \cdots & c_{2,n} \\ \vdots & \vdots & \ddots & \vdots \\ c_{n,1} & c_{n,2} & \cdots & c_{n,n} \end{bmatrix} \tag{3}$$

$$x(t) = [x_1(t)x_2(t)\cdots x_n(t)]^T \tag{4}$$

$$n(t) = [n_1(t)n_2(t)\cdots n_n(t)]^T \tag{5}$$

und

$[]^T =$           Transposition
$c_{i,j}$ (i,j = 1,2...n) =     komplexe Gewichtung
$\tau =$             Ausbreitungsverzögerung

Die Übertragungsfunktionen der einzelnen durch die Sende- und Empfangseinrichtungen S1...n, E1...n gebildeten Übertragungskanäle sind durch die jeweiligen Koeffizienten c11...cnn der Übertragungsmatrix C repräsentiert. Dadurch dass die jeweils die Sendeeinrichtungen S1...n und die Empfangseinrichtungen E1...n kurze Abstände zueinander aufweisen, welche gering sind zur Entfernung 1 zwischen den Sendeeinrichtungen S1...n und den Empfangseinrichtungen E1...n, weisen die Amplituden der einzelnen Übertragungsfunktionen annähernd den selben Wert auf, so dass die Amplituden auf den Wert 1 normiert werden können. Folglich gilt für die Koeffizienten c11...cnn der Übertragungsmatrix C

$$c_{i,j} = \exp\left( j\frac{2\pi}{\lambda} \delta_{i,j} \right), \tag{6}$$

wobei

$\lambda =$     Wellenlänge der Sendesignale
$\delta_{i,j} =$     Abstand zwischen den jeweiligen Sende- und Empfangseinrichtungen

Die empfangsseitige Kompensation der in den Empfangssignalen y1...n enthaltenen Störsignale wird durch folgende Beziehung abgebildet:

$$z(t) = Dy(t - \tau') = DCx(t - \tau - \tau') + Dn(t - \tau') \tag{7}$$

wobei

$$D = \begin{bmatrix} d_{1,1} & d_{1,2} & \cdots & d_{1,n} \\ d_{2,1} & d_{2,2} & \cdots & d_{2,n} \\ \vdots & \vdots & \ddots & \vdots \\ d_{n,1} & d_{n,2} & \cdots & d_{n,n} \end{bmatrix} \qquad (8)$$

$$z(t) = [z_1(t) z_2(t) \cdots z_n(t)]^T \qquad (9)$$

D = Kompensationsmatrix

$\tau'$ = Bearbeitungsverzögerung bedingt durch die Kompensationsfunktion.

Durch die Koeffizienten d11...dnn der Kompensationsmatrix D ist jeweils die Art und Weise festgelegt - z.B. die Amplitude und Phasenlage - mit der die Empfangssignale y1...n additiv überlagert werden.

Um eine optimale Informationsübermittlung zu erreichen, müssen die Koeffizienten d11...dnn der Kompensationsmatrix D so gewählt werden, d.h. die Kompensationsmatrix D muß so optimiert werden, dass die in den jeweiligen Empfangssignalen y1...n enthaltenen Störsignale kompensiert werden. Die Einstellung der Koeffizienten d11...dnn im Rahmen der Optimierung kann dabei adaptiv erfolgen. Erfindungsgemäß spielt bei der Optimierung der Kompensationsmatrix D die räumliche Anordnung der Sende- und Empfangseinrichtungen S1...n, E1...n eine entscheidende Rolle.

Die Optimierung einer Matrix, in diesem Fall die Optimierung der Kompensationsmatrix D ist dem Fachmann geläufig so dass auf diese nur kurz eingegangen wird. Die Optimierung kann im Rahmen der dem Fachmann geläufigen "Wiener Lösung" erfolgen, bei der ein "Mean Square Error, MSE" eingeführt wird, welcher die Differenz zwischen den gewünschten Informationen und den bisher im Rahmen des Optimierungsverfahrens - d.h. mit den bisherigen Einstellungen der Koeffizienten d11...dnn der Kompensationsmatrix D - erhaltenen Informationen repräsentiert. Im Rahmen der Optimierung werden die Koeffizienten d11...dnn der Kompensationsmatrix D so eingestellt, das der MSE einen minimalen Wert aufweist - auch als MMSE bezeichnet. Ein weiterer Lösungsansatz zur Einstellung der Koeffizienten d11...dnn wäre z.B. auch der "Zero-Forcing-Algorithmus".

Zur empfangsseitigen Verarbeitung der Empfangssignale y1...n im Rahmen des Kompensationsverfahrens werden diese in Übereinstimmung mit dem Nyquist-Abtasttheorem mit einer Abtastrate von $1/T_s$ abgetastet. Es werden folgende Beziehungen eingeführt.

$$\begin{aligned} x_i[k] &= x_i(kT_s - \tau - \tau') \\ y_i[k] &= y_i(kT_s - \tau') \qquad (i = 1, 2, \ldots, n) \qquad (10) \\ n_i[k] &= n_i(kT_s - \tau') \end{aligned}$$

wobei $d_i^T$ i = 1...n, die Zeilen der Matrix D repräsentieren.

Der Fehlervektor ist definiert als

$$e[k] = x[k] - Dy[k] \qquad (11)$$

und

$$e_i[k] = x_i[k] - d_i^T y[k] \qquad (i = 1, 2, \ldots, n) \qquad (12)$$

Der MSE zum Zeitpunkt k ist:

$$E\left[\left\|\mathbf{e}[k]\right\|^2\right] = \sum_{i=1}^{n} E\left[\left|x_i[k] - \mathbf{y}^T[k]\mathbf{d}_i\right|^2\right] \qquad (13)$$

wobei

E[]      einen Erwartungswert, und

‖ ‖      den Betrag des Vektors bezeichnet

Um eine Minimierung von (13) zu erreichen werden die Gradienten von E hinsichtlich des Vektors $d_i$ (i = 1...n) bestimmt:

$$\nabla_{\mathbf{d}_i} E\left[\left\|\mathbf{e}[k]\right\|^2\right] = -2E\left[e_i[k]\mathbf{y}^*[k]\right] \qquad (i = 1,2,\ldots,n) \qquad (14)$$

wobei ()* die komplexe Konjugierte darstellt. Die MMSE ergibt sich durch Lösung des Gleichungssystems

$$E\left[e_i[k]y^*[k]\right] = 0 \qquad (i = 1,2,\ldots,n) \qquad (15)$$

und ergibt sich zu:

$$D = C^H\left(CC^H + \frac{1}{E_s/N_0}I\right)^{-1} \qquad (16)$$

wobei $E_s$ die durchschnittliche Energie pro Symbol jedes Sendesignals x1...n darstellt.

Unter der Annahme, dass das Gaussche Rauschen gegen Null geht ($N_0/2 \to 0$), vereinfacht sich (16) zu

$$D = C^{-1} \qquad (17)$$

Diese Bedingung kann nur eingehalten werden, wenn

$$\det C \neq 0 \qquad (18)$$

Dies bedeutet, dass die Koeffizienten d11...dnn der Kompensationsmatrix D nur dann im Sinne der Optimierung problemlos, bzw. sinnvoll einstellbar sind, wenn die Bedingung (18) erfüllt ist.

Wie bereits erläutert sind die Koeffizienten c11...cnn der Matrix C, d.h. die jeweiligen Übertragungsfunktionen der zwischen den Sende- und Empfangseinrichtungen S1...n, E1...n angeordneten Übertragungskanäle, von der Wellenlänge λ der Sendesignale x1...n und der Position der einzelnen Sende- und Empfangseinrichtungen S1...n, E1...n abhängig - siehe (6)

Erfindungsgemäß wird die räumliche Anordnung der einzelnen Sende- und Empfangseinrichtungen S1...n, E1...n, d.h. beispielsweise der Abstand der Sende- und Empfangseinrichtungen S1...n, E1...n untereinander so gewählt, dass die in (18) genannte Bedingung erfüllt ist bzw. dass die in (18) genannte Bedingung im Rahmen der adaptiven Optimierung der Kompensationsmatrix D eingehalten werden kann. Bei Anordnung der Sendeund Empfangseinrichtungen S1...n, E1...n unter Einhaltung der Bedingung (18) können die Koeffizienten d11...nn der Kompensationsmatrix D im Rahmen der adaptiven Optimierung so eingestellt bzw. optimiert werden, dass eine Kompensation der in den Empfangssignalen y1...n enthaltenen Störsignale ermöglicht wird.

Da aktuelle Funk-Übertragungssysteme, insbesondere Richtfunk-Übertragungssysteme mit immer höheren Trägerfrequenzen - 10 bis 40 GHz - arbeiten, beträgt der Abstand d der beiden äußeren Sende- und Empfangseinrichtungspaare S1,E1, Sn,En unter Einhaltung der Bedingung (18) nur noch wenige Meter, so dass die entsprechenden Sende- und Empfangseinrichtungen S1...n, E1...n in besonders wirtschaftlicher Weise beispielsweise an einem Sende- bzw. Empfangsmasten angebracht werden können.

Da im Rahmen des erfindungsgemäßen Verfahrens für n drahtlose Übertragungskanäle die selbe Übertragungsfrequenz bzw. Trägerfrequenz genutzt wird, wird im Vergleich zu herkömmlichen drahtlosen Übertragungssystemen eine n-mal höhere Bandbreiteneffizienz erreicht, was insbesondere für zukünftige drahtlose Kommunikationsnetze, insbesondere für im Teilnehmeranschlussbereich eingesetzte Funksysteme, bei der Vergabe bzw. bei der Zuordnung von Trägerfrequenzen eine wichtige Rolle spielen wird.

Gemäß einem weiteren Aspekt des erfindungsgemäßen Verfahrens kann die Kompensationsmatrix D dahingehend optimiert werden, dass bei den Empfangssignalen y1...n eine Verbesserung der Leistungs-Effizienz, bzw. eine Verbesserung des Signal/Rauschsignalabstandes im Empfänger erreicht wird. Erfindungsgemäß werden die Sende- und Empfangseinrichtungen S1...n, E1...n räumlich in der Art und Weise angeordnet, dass neben der Einhaltung der Bedingung (18) eine Verbesserung des Signal/Rauschsignalabstands nach der Kompensation bei den einzelnen Nutzsignalen z1...n erreicht wird.

Für die folgenden Ausführungen sei angenommen, dass

$$D = C^{-1} \quad \text{und} \quad N_0/2 \to 0 \tag{19}$$

$$z(t) = C^{-1}y(t - \tau') = x(t - \tau - \tau') + C^{-1}n(t - \tau') \tag{20}$$

Die Magnitude der Übertragungsfunktion wird auf 1 normiert, wobei sich für die Leistungsverstärkung folgende Beziehung ergibt:

$$G \equiv E\left[\frac{\|\mathbf{n}(t - \tau')\|^2}{\|C^{-1}\mathbf{n}(t - \tau')\|^2}\right] = \frac{n}{\sum_{i=1}^{n}\sum_{j=1}^{n}|d_{i,j}|^2} \tag{21}$$

Als untere Grenze der Empfangsleistung ergibt sich

$$G = E\left[\frac{\|\mathbf{n}(t - \tau')\|^2}{\|C^{-1}\mathbf{n}(t - \tau')\|^2}\right] \geq E\left[\frac{\|\mathbf{n}(t - \tau')\|^2}{\|C^{-1}\|^2\|\mathbf{n}(t - \tau')\|^2}\right] = |\lambda_{min}(C)|^2 \tag{22}$$

als obere Grenze ergibt sich

$$G = E\left[\frac{\|C\mathbf{n}'(t - \tau')\|^2}{\|\mathbf{n}'(t - \tau')\|^2}\right] \leq E\left[\frac{\|C\|^2\|\mathbf{n}'(t - \tau')\|^2}{\|\mathbf{n}'(t - \tau')\|^2}\right] = |\lambda_{max}(C)|^2 \tag{23}$$

wobei

$\lambda_{min}(C) =$     Eigenwert der Matrix C mit minimaler Amplitude
$\lambda_{max}(C) =$     Eigenwert der Matrix C mit maximaler Amplitude
$\|A\| =$     Norm 2 der Matrix A

Hinsichtlich der beiden Grenzen lässt sich folgende Beziehung ableiten:

$$|\lambda_{min}(C)|^2 \leq G \leq |\lambda_{max}(C)|^2 \qquad (24)$$

Aus (24) lässt sich die optimale räumliche Anordnung der Sende- und Empfangseinrichtungen ableiten, wobei die Eigenwerte der Matrix C und somit deren Determinante einen maximalen Wert aufweisen

Unter der Annahme dass die einzelnen Sende- und Empfangseinrichtungen S1...n, E1...n jeweils räumlich nah beieinander angeordnet sind, ergibt sich

$$|c_{i,j}|=1 \qquad (i,j = 1,2,...,n) \qquad (25)$$

unter der Annahme von (25) kann die linke Seite von (23) umgewandelt werden zu

$$G = E\left[\frac{\left\|C\mathbf{n}'(t-\tau')\right\|^2}{\left\|\mathbf{n}'(t-\tau')\right\|^2}\right] \leq E\left[\frac{n\left\|\mathbf{n}'(t-\tau')\right\|^2}{\left\|\mathbf{n}'(t-\tau')\right\|^2}\right] = n \qquad (26)$$

welche die maximal mögliche Verstärkung der Empfangsleistung bezeichnet, die bei geeigneter geometrischer Anordnung der Sende- und Empfangseinrichtungen erreicht werden kann.

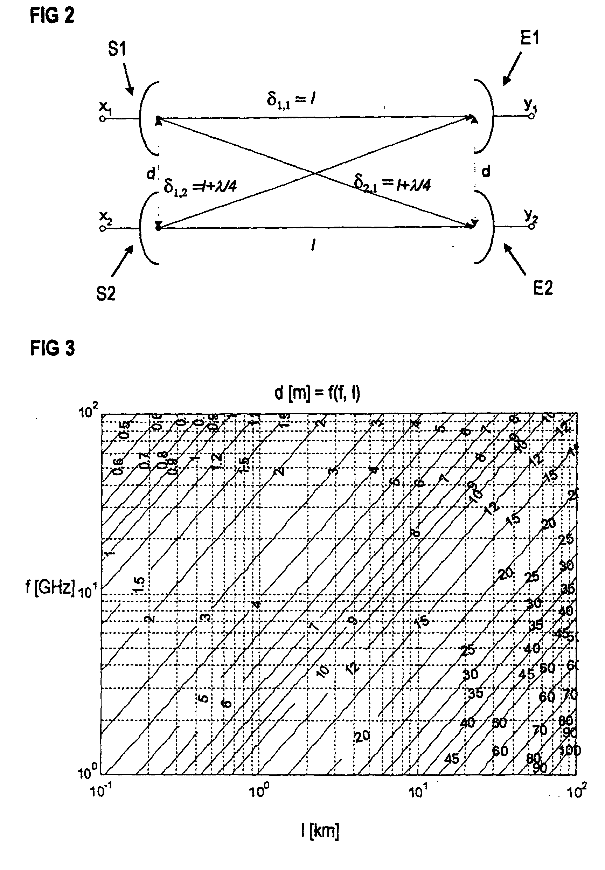

In FIG 2 ist beispielhaft das dem erfindungsgemäßen Verfahren zugrundeliegende Kanalmodell für den Fall n = 2 dargestellt. Bei dieser Ausgestaltungsvariante hat gemäß (25) die Übertragungsmatrix C folgende Form:

$$C = \begin{bmatrix} e^{j\alpha_{1,1}} & e^{j\alpha_{1,2}} \\ e^{j\alpha_{2,1}} & e^{j\alpha_{2,2}} \end{bmatrix} \qquad (27)$$

Um eine empfangsseitige Kompensation der in den Empfangssignalen y1, y2 enthaltenen Störsignale zur erreichen muß gemäß (18) folgende Bedingung eingehalten werden:

$$e^{j(\alpha_{1,1}+\alpha_{2,2})} \neq e^{j(\alpha_{1,2}+\alpha_{2,1})} \qquad (28)$$

oder äquivalent

$$\alpha_{1,1} + \alpha_{2,2} \neq \alpha_{1,2} + \alpha_{2,1} + 2k\pi \qquad (k \text{ integer}) \qquad (29)$$

Durch die in (28) und (29) angegebene Bedingungen kann der optimale Abstand d der jeweiligen Sende- und Empfangseinrichtungen S1,2, E1,2 abgeleitet werden, bei dem eine adaptive Optimierung der Kompensationsmatrix D zur Kompensation der Störsignale erreicht werden kann.

Um gleichzeitig eine optimale Verstärkung der Empfangsleistung der Empfangssignale y1,2 zu erreichen, lässt sich aus (21) folgende Beziehung ableiten

$$G = \left|\frac{e^{j(\alpha_{1,1}+\alpha_{2,2})}-e^{j(\alpha_{1,2}+\alpha_{2,1})}}{2}\right|^2 \qquad (30)$$

Die Leistungsverstärkung erreicht ihr Maximum wenn

$$\alpha_{1,1} + \alpha_{2,2} = \alpha_{1,2} + \alpha_{2,1} + (2k + 1)\pi \qquad (k \text{ integer}) \qquad (31)$$

**EP 1 229 670 B1**

Bei optimaler Anordnung der Sende- und Empfangseinrichtung S1,2, E1,2 unter Einhaltung des optimalen Abstands d lasst sich die Kompensationsmatrix D gemäß (31) so optimieren dass für die Empfangssignale y1,2 eine Leistungsverstärkung von ungefähr 3 dB erreicht wird.

In FIG 2 ist eine von mehreren Anordnungsvarianten zur optimalen Anordnung der Sende- und Empfangseinrichtungen S1,2, E1,2 für den Fall n=2 dargestellt, durch welche die Bedingungen (31) (= maximal mögliche Leistungsverstärkung ) und (29) (= bestmögliche Kompensation der in den Empfangssignalen y1,2 enthaltenen Störsignale) gleichzeitig erfüllt ist. Bei der dargestellten Anordnungsvariante sind die Sende- und Empfangseinrichtungen S1,2, E1,2 symmetrisch angeordnet, wobei die beiden Sende- und Empfangseinrichtungen S1,2, E1,2 jeweils einen optimalen Abstand d zueinander aufweisen. Jedes Antennenpaar weist eine Entfernung 1 auf.

FIG 3 zeigt für den Fall n=2 in einem Diagramm den aus Beziehung (31) resultierenden Abstand d für eine optimierte Leistungsverstärkung in Abhängigkeit von der Entfernung 1 und der Trägerfrequenz der ausgesendeten Sendesignale x1,2.

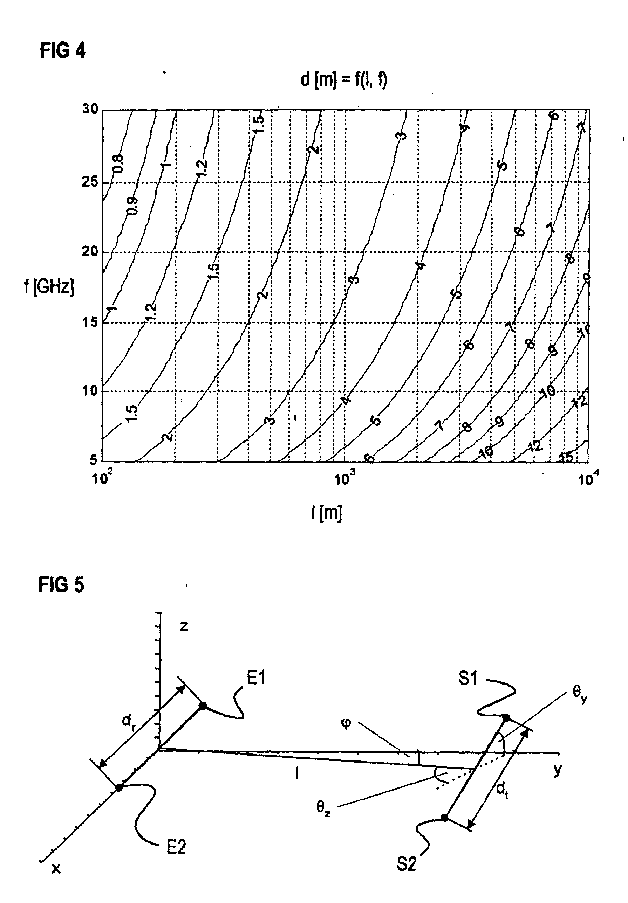

FIG 4 zeigt einen Detailausschnitt aus FIG 3 für den Bereich $10^2 < 1 < 10^4$.

Wie bereits erläutert, werden die besten Ergebnisse bezüglich der Leistungsverstärkung bei Anordnung der Sende- und Empfangseinrichtungen S1...n, E1...n mit optimalen Abstand $d_{opt}$ erreicht, d.h. unter Einhaltung der Beziehung (31) weist das Übertragungssystem den größten Signal-/Rauschsignalabstand und die geringste Empfindlichkeit gegen Toleranzen - welche beispielsweise bei der Montage der Sende- und Empfangseinrichtungen S1...n, E1...n auftreten, auch als Montage-Toleranz-Empfindlichkeit bezeichnet - auf. Es ist zu berücksichtigen, dass die Anordnung der Sende- und Empfangseinrichtungen S1...n, E1...n durchaus Toleranzen aufweisen kann. FIG 5 zeigt schematisch für den Fall n = 2 verschiedene Arten von Toleranz-Einflüsse, für die folgende "worst case"-Bedingungen annehmbar sind:

- l $= \pm 100$ m

- $d_t$ und $d_r$ $= \pm 10$ cm

- $\varphi$ $= \pm 5°$

- $\Theta_y$ und $\Theta_z$ $= \pm 5°$

Bei Verwendung einer Trägerfrequenz von f = 15 GHz und einer Entfernung von l = 5 km sind die Leistungsverluste der Nutzsignale z1,2 nie größer als 0,05 dB - beispielsweise durch Montecarlo-Simulation ermittelt.

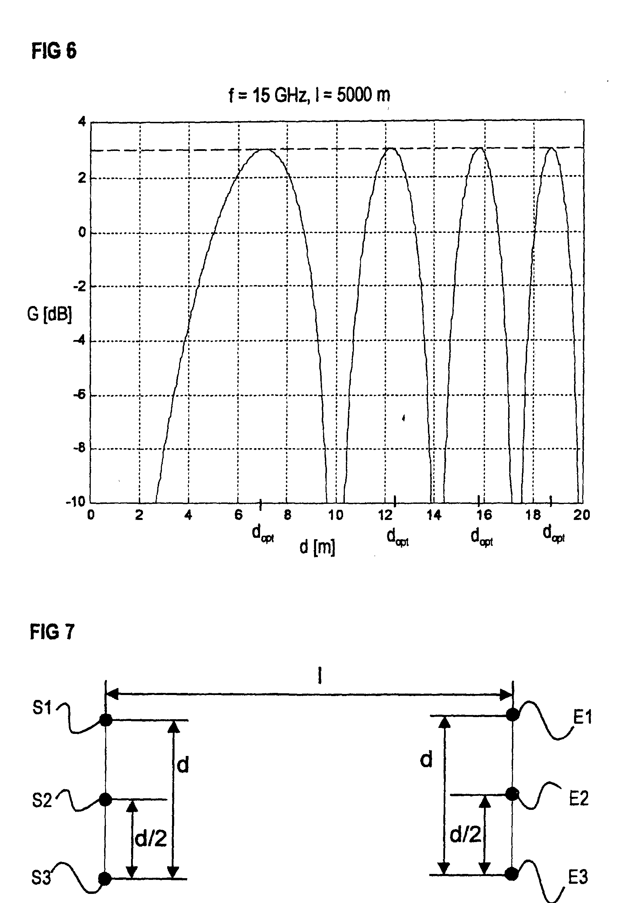

FIG 6 zeigt in einem Diagramm die Abhängigkeit der Leistungsverstärkung G und der geometrischen Anordnung (d.h. vom Abstand d) der Sende- und Empfangseinrichtungen für den Fall f = 15 GHz und einer Entfernung von 1 = 5 km und n = 2. Gemäß der Beziehung (31) entspricht jedes in FIG 6 dargestellte Maximum dem ganzzahligen Vielfachen von k. Das erste Maximum des in FIG 6 dargestellten Graphen stellt das wichtigste Ergebnis des im Rahmen des erfindungsgemäßen Verfahrens verwendeten Abstands d zwischen in diesem Falle 2 Paarungen von Sende- und Empfangseinrichtungen S1,2, E1,2 dar, da dieser Abstand die kürzeste Distanz zwischen zwei Sende- bzw. zwischen zwei Empfangseinrichtungen darstellt. Im Bereich dieses ersten Maximums - in diesem Fall bei einer Entfernung d = 7 m - weist die dargestellte Leistungsverstärkung das breiteste Maximum und somit die breiteste Toleranzschwelle auf.

Um für den Fall n = 3 eine optimale Leistungsverstärkung der empfangenen Signale y1...3 zu erreichen, müssen drei Paare von Sende- und Empfangseinrichtungen S1...3, E1...3, also 6 Antennen gemäß dem erfindungsgemäßen Verfahren angeordnet werden. Zur Abschätzung der maximal möglichen Leistungsverstärkung kann die Beziehung (26) herangezogen werden, woraus sich für den allgemeinen Fall (d.h. ohne Einschränkung an die räumliche Geometrie der jeweils 3 Sende- und Empfangseinrichtungen) beispielsweise folgende Matrix C ableiten lässt:

$$C = \begin{bmatrix} 1 & e^{j\frac{\pi}{3}} & e^{-j\frac{2\pi}{3}} \\ e^{j\frac{\pi}{3}} & 1 & e^{j\frac{\pi}{3}} \\ e^{-j\frac{2\pi}{3}} & e^{j\frac{\pi}{3}} & 1 \end{bmatrix} \qquad (32)$$

Für den praktischen Betrieb wird jedoch angestrebt, die jeweils 3 Sende- und Empfangseinrichtungen auf einer geometrischen Geraden (z.B. einem Masten oder Turm) anzuordnen. FIG 7 zeigt eine für den Fall n = 3 entsprechende geometrische Anordnung der Sende- und Empfangseinrichtungen S1...3, E1...3.

Aus (32) ergibt sich bei Verwendung einer Trägerfrequenz von f = 15 GHz und einem Abstand zwischen Sende- und Empfangseinrichtungen von 1 = 5 km ein optimaler Abstand von d = 11,5 m. Der optimale Abstand kann beispielsweise mit Hilfe einer numerischen Maximum-Suche für die Leistungsverstärkung G in Abhängigkeit des Abstandes d ermittelt werden.

Bei dieser Anordnung weist die Matrix C folgende Koeffizienten auf:

$$C_{opt} = \begin{bmatrix} e^{j0.4486} & e^{j1.4958} & e^{-j1.6458} \\ e^{j1.4958} & e^{j0.4486} & e^{j1.4958} \\ e^{-j1.6458} & e^{j1.4958} & e^{j0.4486} \end{bmatrix} \qquad (33)$$

Unter der weiteren Annahme, dass $N_0 \rightarrow 0$, ergibt sich

$$C_{opt}^{-1} = 0.1925 e^{-j0.8222} \begin{bmatrix} e^{-j0.4486} & e^{-j1.4958} & e^{j1.6458} \\ e^{-j1.4958} & e^{-j0.4486} & e^{-j1.4958} \\ e^{j1.6458} & e^{-j1.4958} & e^{-j0.4486} \end{bmatrix} \qquad (34)$$

Hier wird die Bedingung (18) eingehalten; die Leistungsverstärkung G für die Empfangssignale beträgt bei Optimierung der Kompensationsmatrix D ungefähr 4,77 dB, was dem theoretisch erreichbaren Gewinn für den Fall n=3 entspricht.

Unter realistischen Bedingungen muss mit zeitvarianten Übertragungskanälen und mit zumindest temporären Mehrwegeausbreitungen bei den ausgesendeten Sendesignalen x1...n gerechnet werden. Das bedeutet, dass die bisherigen durch die Matrix C bzw. durch deren Koeffizienten c11...cnn repräsentierten Übertragungsfunktionen zusätzliche frequenzselektive Übertragungseigenschaften aufweisen. Somit sind die bei der Kompensation der empfangenen Signale y1...n eingesetzten Koeffizienten d11...dnn der Kompensationsmatrix D zusätzlich frequenzabhängig und müssen adaptiv eingestellt werden. Um die frequenzselektiven Eigenschaften der Übertragungskanäle zu berücksichtigen, können bei der schaltungstechnischen Ausgestaltung der Kompensationseinrichtungen FIR-Filter eingesetzt werden. Die Adaption wird mit Hilfe von Korrelatoren, z.B. nach dem "Stochastic Gradient Algorithm" durchgeführt.

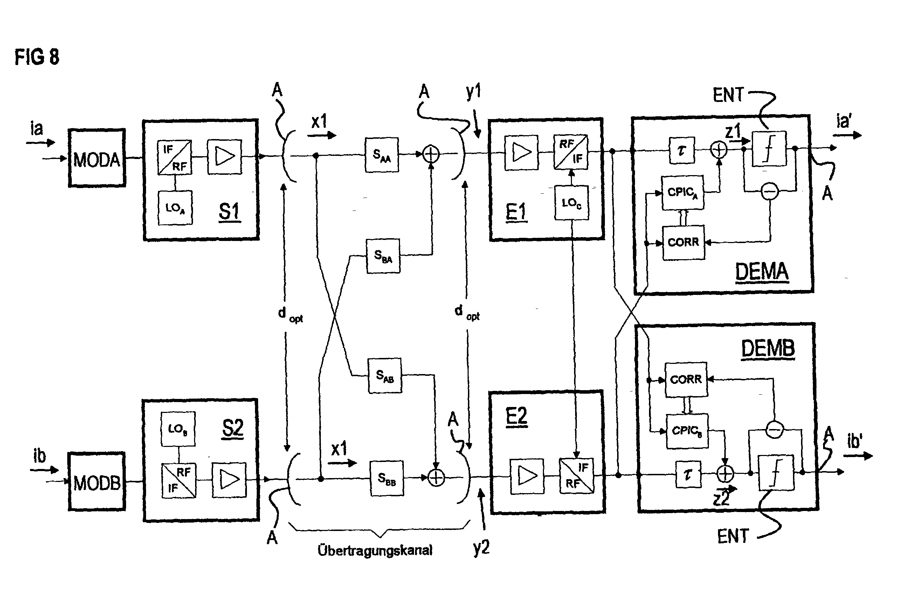

FIG 8 zeigt in einem Blockschaltbild eine beispielhafte, schaltungstechnische Ausgestaltung der Sende- und Empfangseinrichtungen für den Fall n = 2. Die Anordnung weist zwei Paare von Sende- und Empfangseinrichtungen S1,2 und E1,2 auf, welche jeweils eine Sende- bzw. Empfangsantenne A aufweisen. Zwischen den Antennen A sind dem Fachmann geläufige Übertragungskanäle $S_{AA}$, $S_{BB}$, $S_{AB}$, $S_{BA}$ angeordnet. Die Antennen A weisen den in FIG 8 dargestellten optimalen Abstand $d_{opt}$ auf. Die Sendeeinrichtungen S1,2 weisen jeweils die bekannten, für eine drahtlose Datenübertragung erforderlichen Komponenten auf - z.B. einen lokalen Oszillator LO, einen Frequenzmischer IF/RF und diverse Filtereinrichtungen. Die zu übermittelnden Informationen ia, ib werden jeweils durch einen den Sendeeinrichtungen S1,2 zugeordneten Modulator MODA, MODB moduliert. Die modulierten Sendesymbole werden anschließend in der Sendeeinrichtung S1,2 für eine drahtlose Datenübertragung aufbereitet, wobei die Sendeeinrichtungen S1,2 so konfiguriert sind, dass die über die Antennen A der Sendeeinrichtungen S1,2 ausgesendeten Sendesignale x1,2 jeweils die gleiche Trägerfrequenz - Cochannel - und die gleiche Polarisationsebene Co-Polar - aufweisen - "Co-Polar Cochannel"-Betrieb.

Die durch die Empfangseinrichtungen E1,2 empfangenen Signale y1,2 werden durch jeweils den Empfangseinrichtungen E1,2 zugeordnete Demodulatoren DEMA, DEMB demoduliert. Wie bei "Co-Polar"-Betrieb üblich, ist der der ersten Empfangseinrichtung E1 zugeordnete Demodulator DEMA über eine Verbindungsleitung auch mit der zweiten Empfangseinrichtung E2 und der der zweiten Empfangseinrichtung E2 zugeordnete Demodulator DEMB über eine Verbindungsleitung mit der ersten Empfangseinrichtung E1 verbunden.

Die Demodulatoren DEMA, DEMB weisen jeweils eine Kompensationseinrichtung CPICA, CPICB zur Kompensation der an den jeweiligen Empfangseinrichtungen E1,2 mit den Empfangssignalen y1,2 empfangenen Störsignale auf. Die Kompensationseinrichtungen CPICA, CPICB sind in für den Fachmann geläufiger Art und Weise jeweils mit einem Korrelator CORR verbunden, welcher wiederum an einen Entscheider ENT angeschlossen ist. Die Durchführung des jeweils mit Hilfe der Kompensationseinheiten CPICA, CPICB in Verbindung mit den Korrelatoren CORR und Entscheidern ENT durchgeführten Kompensationsverfahren, als auch die adaptive Einstellung bzw. Optimierung der das in den Kompensationseinheiten CPICA, CPICB jeweils realisierte Kompensationsverfahren steuernden Koeffizienten - hier mit da und db bezeichnet - der bereits erläuterten Kompensationsmatrix D sind dem Fachmann ebenfalls geläufig.

Die mit Hilfe der Kompensationsverfahren fehlerbereinigten Empfangssignale ia', ib' werden jeweils an einen Ausgang der Demodulatoren DEM weitergeleitet. Folgende Übertragungsparameter sind bei der in FIG 8 dargestellten Anordnung zur Realisierung einer "Co-Polar Cochannel" Übertragung vereinfacht angenommen.

$$S_{AA} = S_{BB} = 1$$

Für eine optimale Kompensation der in den Empfangssignalen y1,2 enthaltenen Störsignale durch die Kompensationseinheiten CPICA, CPICB muß folgendes gelten:

CPICA (da) = -$S_{BA}$     (= Phasenverschiebung von 180°) und
CPICB (db) = -$S_{AB}$     (= Phasenverschiebung von 180°)

Werden die einzelnen Sende- bzw. Empfangseinrichtungen S1,2, E1,2 bzw. deren Antennen A gemäß dem erfindungsgemäßen Verfahren in einem für die Leistungsverstärkung optimalen Abstand angeordnet, gilt folgende Beziehung:

$S_{BA} = S_{AB} = j$     (= Phasenverschiebung von 90°)

Unter Einhaltung der oben genannten Bedingungen wird das von der ersten Sendeeinrichtung S1 ausgesendete Sendesignal x1 im Entscheider ENT der der ersten Empfangseinrichtung E1 zugeordneten Demodulatoreinrichtung DEMA im übertragungstechnischen Sinne "zweimal" empfangen. Einmal auf direktem Wege über den Übertragungskanal $S_{AA}$ und zusätzlich über den Übertragungskanal $S_{AB}$, die zweite Empfangseinrichtung E2 und über die Verbindungsleitung zwischen der zweiten Empfangseinrichtung E2 und dem der ersten Empfangseinrichtung E1 zugeordneten Demodulator DAMA.

Bedingt durch die Anordnung der Sende- bzw. Empfangseinrichtungen S1,2, E1,2 und damit bedingt durch die Übertragungseigenschaften $S_{AB}$ des zweiten Übertragungsweges und zusätzlich bedingt durch die auf die Übertragungseigenschaften $S_{BA}$ abgestimmten Koeffizienten der Kompensationsmatrix - realisiert in der Kompensationseinheit CPICA der Demodulatoreinrichtung DEMA - weist das über den zweiten Weg am Demodulator DEMA eingehende Empfangssignal eine Phasenverschiebung von 360° auf und ist somit phasenkonform mit dem über den ersten Weg am Demodulator DEMA eingehenden Empfangssignal. Um Laufzeitunterschiede zu kompensieren, wird das über den ersten Weg eingehende Empfangssignal y1 mittels einer im Demodulator DEMA angeordneten Verzögerungseinrichtung τ entsprechend verzögert. Gleiches gilt für das über die Antenne A der zweiten Sendeeinrichtung S2 ausgesendete Sendesignal x2, welches über zwei Übertragungswege - hier $S_{BB}$ und $S_{BA}$ - an der zweiten Empfangseinrichtung E2, bzw. an dem dieser zugeordneten Demodulator DEMB empfangen wird.

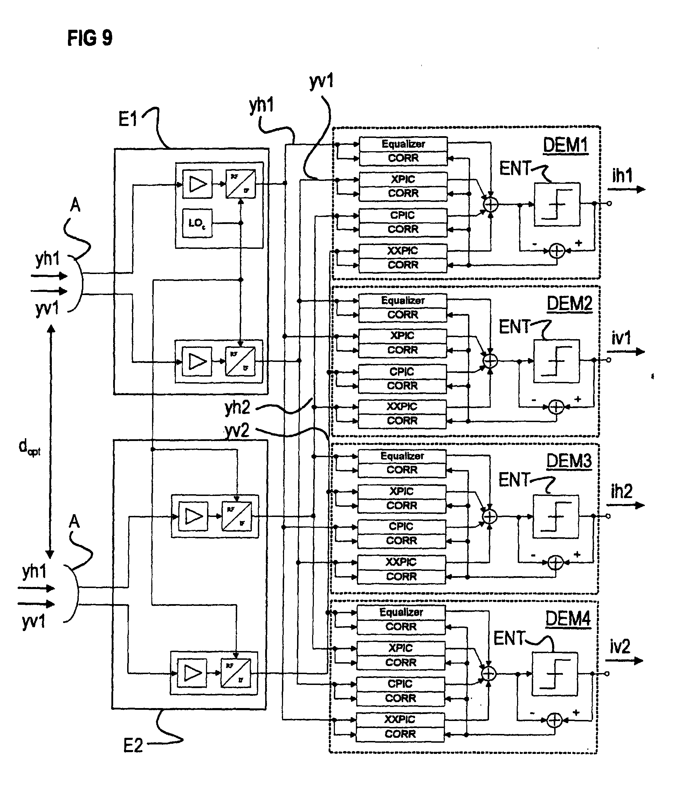

In FIG 9 ist eine vorteilhafte Weiterbildung der in FIG 8 dargestellten Schaltungsanordnung dargestellt, wobei in FIG 9 nur der Empfangsteil der vorteilhaften Weiterbildung abgebildet ist. FIG 9 zeigt die beiden bereits in FIG 8 erläuterten Empfangseinheiten E1,2, welche ebenfalls für die Realisierung des "Co-Polar Cochannel"-Betriebes ausgestaltet sind. Im Gegensatz zu der in Fig. 8 dargestellten Ausführungsvariante werden im Rahmen der Weiterbildung jedoch zusätzlich beide Polarisationsebenen der Sendesignale bzw. der an den Empfangseinrichtungen E1,2 eingehenden Empfangssignale genutzt. Hierzu sind in den Empfangseinheiten S1,2 weitere Komponenten angeordnet, durch welche jeweils die auf der horizontalen und vertikalen Polarisationsebene empfangenen Signale extrahiert werden. Die Nutzung der horizontalen und vertikalen Polarisationsebenen der Sendesignale für die Informationsübermittlung ist dem Fachmann geläufig, so dass auf diese nicht näher eingegangen wird. Bei der in FIG 9 dargestellten Anordnung werden bei Verwendung von nur zwei Paaren von Sende- bzw. Empfangseinrichtungen S1,2, E1, E2 vier parallele Übertragungskanäle für die Informationsübermittlung genutzt, wodurch eine Verdoppelung der durch die drahtlosen Übertragungskanäle bereitgestellten Übertragungsressourcen erreicht wird. Die dargestellte Anordnung entspricht einer schaltungstechnischen Realisierung des in FIG 1 dargestellten allgemeinen Systemkonzepts für den Fall n = 2 wobei 4 unabhängige Sendesignale übermittelt und empfangenen werden.

Im Folgenden werden die auf der horizontalen Polarisationsebene empfangenen Signale mit yh1 bzw. yh2 und die auf der vertikalen Polarisationsebene empfangenen Signale mit yv1 bzw. yv2 bezeichnet. Dementsprechend sind den beiden Empfangseinrichtung E1, E2 jeweils zwei Demodulatoren D1...4 zugeordnet, wobei der erste Demodulator DEM1 zur Demodulierung des an der ersten Empfangseinrichtung E1 empfangenen, horizontalen Empfangssignals yh1, der zweite Demodulator DEM2 zur Demodulierung des an der ersten Empfangseinrichtung E1 empfangenen, vertikalen Empfangssignals yv1, der dritte Demodulator DEM3 zur Demodulierung des an der zweiten Empfangseinrichtung E2 empfangenen, horizontalen Empfangssignals yh2 und der vierte Demodulator DEM4 zur Demodulierung des an der zweiten Empfangseinrichtung E2 empfangenen, vertikalen Empfangssignals yv2 vorgesehen ist. Analog zu dem in FIG1 dargestellten allgemeinen Systemkonzept - für den Fall n=4 - werden die empfangenen Signale yh1, yv1, yh2, yv2 nach entsprechender Verarbeitung in den jeweiligen Empfangseinrichtungen E1, E2 jeweils an alle Demodulatoren DEM1...4 weitergeleitet. Jedes an einen Demodulator DEM1...4 herangeführte Empfangssignal yh1, yv1, yh2, yv2 wird an einen auf die Eigenschaften des jeweiligen Signals yh1, yv1, yh2, yv2 entsprechend abgestimmten, bzw. einen Koeffizienten der eingangs erwähnten Kompensationsmatrix D repräsentierenden Kompensator XPIC, CPIC, XXPIC sowie einem diesem zugeordneten Korrelator CORR weitergeleitet. Die mit Hilfe der Kompensatoren realisierten Kompensationsverfahren zur Kompensierung der in den Empfangssignalen yh1, yv1, yh2, yv2 enthaltenen Störsignale kann durch bekannte, beispielsweise adaptive Kompensationsalgorithmen realisiert sein, welche z.B. in speziellen Hardwarekomponenten - z.B. ASICS - realisiert sind. In FIG 9 ist die Funktion der jeweiligen Kompensatoren XPIC, CPIC, XXPIC in Abhängigkeit von den jeweils herangeführten Empfangssignalen yh1, yv1, yh2, yv2 durch die Zuordnung der Kurzzeichen verdeutlicht:

CPIC     Cochannel Interference Canceller
XPIC     Cross-Channel Interference Canceller
XXPIC    Cross-XPIC

In jedem Demodulator DEM1...4 werden die an den Ausgängen der Kompensatoren XPIC, CPIC, XXPIC anliegenden Signale summiert und das jeweilige Datensignal ih1, iv1, ih2, iv2 Über einen Entscheider ENT jeweils an einen Ausgang A der Demodulatoren DEM1...4 weitergeleitet.

Um im Rahmen des Adaptions-Vorgangs optimale Kompensationsergebnisse, d.h. optimale Einstellungen der mit Hilfe der Korrelatoren CPIC, XPIC, XXPIC realisierten Koeffizienten der Kompensationsmatrix D zu erhalten, sind erfindungsgemäß die mit den Empfangseinrichtungen E1, E2 verbundenen Empfangsantennen A in Verbindungen mit den entsprechenden Sendeeinrichtungen - nicht dargestellt - in einen optimalen Abstand $d_{opt}$ ausgerichtet, welcher so gewählt ist. dass die Bedingung (18) für den Fall n = 2 erfüllt ist.

Allgemein sei angemerkt, dass die in den jeweiligen Empfangseinrichtungen E1...n angeordneten Referenzfrequenzen annähernd den gleichen Wert aufweisen müssen, um optimale Empfangsergebnisse zu gewährleisten. Dies kann beispielsweise dadurch erreicht werden, dass eine entsprechende Mikrowellenverbindung zwischen den einzelnen Empfangseinrichtungen E1...n eingerichtet wird. Alternativ können separate lokale Oszillatoren in den jeweiligen Empfangseinrichtungen E1...n angeordnet werden, welche beispielsweise über geeignete Verbindungen (z. B. Koaxialkabel) synchronisiert werden.

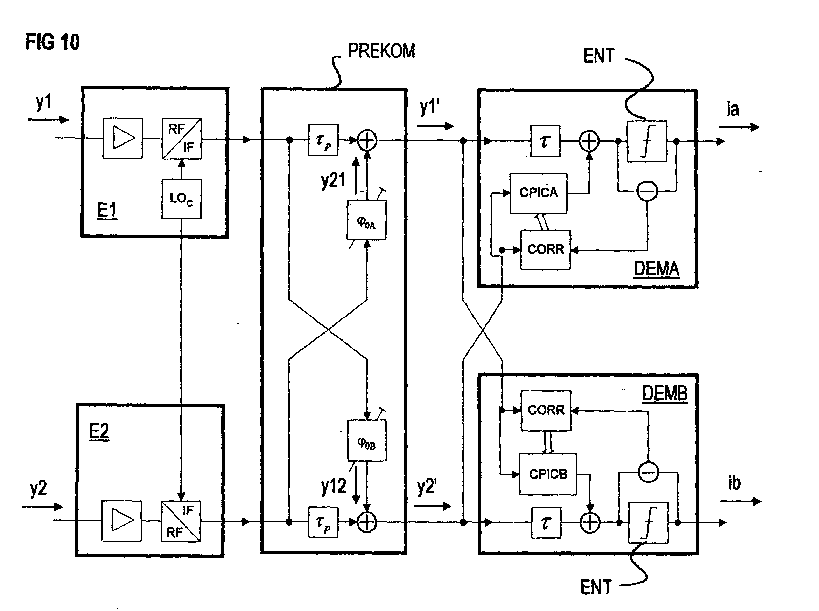

FIG 10 zeigt eine weitere vorteilhafte Weiterbildung der in Figur 8 und 9 dargestellte Ausgestaltungsvarianten. FIG 10 zeigt - beispielhaft für den Fall n = 2 - die bereits beschriebenen Empfangseinrichtungen E1,2 und die diesen entsprechend zugeordneten Demodulatoren DEMA, DEMB. Im Unterschied zu den bisherigen Ausgestaltungsvarianten ist zwischen den Empfangseinheiten E1,2 und den jeweiligen Demodulatoren DEMA, DEMB eine zusätzliche Vorkompensationseinrichtung PREKOM angeordnet. Die Funktionsweise der Vorkompensatoreinheit PREKOM entspricht den bereits erläuterten, in den Demodulatoren DEMA, DEMB angeordneten Kompensationseinrichtungen CPICA, CPICB. Im Unterschied zu den in den Demodulatoren DEM angeordneten Kompensationseinrichtungen CPICA, CPICB erfolgt die Anpassung der in der Vorkompensationseinrichtung PREKOM realisierten Operationsparameter $\phi_{0A}$, $\phi_{0B}$ nicht adaptiv sondern per Voreingabe, d.h. per manueller Einstellung. Im Rahmen der Voreinstellung wird beispielsweise die Phasenverschiebung der mit Hilfe der Vorkompensationseinrichtung PREKOM übergekoppelten Signale y12, y21 vorgegeben. Das manuelle Einstellen der Phasenverschiebung kann zum einen bei der Installierung des gesamten Systems oder automatisch während einer speziellen Einrichtungsroutine während des Betriebes erfolgen. Mit Hilfe der Vorkompensationseinrichtung PREKOM wird eine grobe "Vorab"-Kompensation der in den Empfangssignalen y1,2 enthaltenen Störsignale erreicht. Treten werden des Betriebes zusätzliche Störungen auf - beispielsweise durch klimatische Bedingungen verursachte Laufzeitunterschiede - werden diese in bereits beschriebener Weise durch die jeweils in den Demodulatoren DEMA, DEMB angeordneten Kompensationseinrichtungen CPICA, CPICB im Rahmen der adaptiven Optimierung kompensiert, wobei hierbei die Anpassung der Operationsparameter, d.h. der Koeffizienten der mit Hilfe der Kompensationseinrichtungen CPICA, CPICB realisierten Koeffizienten der Kompensationsmatrix D, adaptiv erfolgt.

Vorteilhaft können nach erfolgter "Vorab"-Kompensation" der bereits bekannten, in den Empfangssignalen y1,2 enthaltenen Störsignale die in den vorab entstörten Empfangssignalen y'1,2 enthaltenen Nutzsignale bzw. Nutzinformationen ia, ib in den nachgeschalteten Demodulatoren DEMA, DEMB besser erfasst und somit fehlerfreier verarbeitet werden.

**Patentansprüche**

1. Verfahren zum drahtlosen Übermitteln von Informationen mit Hilfe von mehreren Sendesignalen (x1...n), die mit wenigstens annähernd gleicher Trägerfrequenz und wenigstens annähernd gleicher Polarisation von mehreren Sendeeinrichtungen (S1...n) über mehrere zugeordnete drahtlose Übertragungskanäle (c11, c22, ..., cnn) an mehrere Empfangseinrichtungen (E1...n) gesendet werden,

   - wobei das Empfangssignal (y1...n) an jeder der Empfangseinrichtungen (E1...n) das über den jeweils zugeordneten Übertragungskanal übermittelte Signal und außerdem Anteile der Sendesignale aus den anderen Übertragungskanälen als Störsignale enthält, gemäß der Übertragungsmatrix

$$C = \begin{bmatrix} c_{1,1} & c_{1,2} & \cdots & c_{1,n} \\ c_{2,1} & c_{2,2} & \cdots & c_{2,n} \\ \vdots & \vdots & \ddots & \vdots \\ c_{n,1} & c_{n,2} & \cdots & c_{n,n} \end{bmatrix},$$

   worin die Matrixkoeffizienten $c_{i,j}$ mit i=1...n und j=1...n jeweils die Übertragungsfunktion zwischen der i-ten Sendeeinrichtung und der j-ten Empfangseinrichtung darstellen,
   - und wobei aus den Empfangssignalen (y1...n) Nutzsignale (z1...n) erzeugt werden, deren jedes aus einer komplex gewichteten Überlagerung eines individuell zugeordneten Empfangssignals mit jeweils allen anderen Empfangssignalen besteht, gemäß einer Kompensationsmatrix

$$D = \begin{bmatrix} d_{1,1} & d_{1,2} & \cdots & d_{1,n} \\ d_{2,1} & d_{2,2} & \cdots & d_{2,n} \\ \vdots & \vdots & \ddots & \vdots \\ d_{n,1} & d_{n,2} & \cdots & d_{n,n} \end{bmatrix},$$

   worin die Matrixkoeffizienten $d_{i,j}$ mit i=1...n und j=1...n jeweils die komplexe Gewichtung des i-ten Empfangssignals im j-ten Nutzsignal darstellen und derart eingestellt werden, dass in jedem Nutzsignal nur die empfangenen Störsignale kompensiert oder reduziert sind unter der Bedingung, dass die Störsignale an den Empfangseinrichtungen mit Phasenlagen innerhalb eines gegebenen Phasenbereiches empfangen werden,

   **dadurch gekennzeichnet,**

   - **dass** jedes der Sendesignale (x1...n) ohne Verknüpfung mit den jeweils anderen Sendesignalen gesendet wird,
   - und **dass** die Phasenlagen der an den Empfangseinrichtungen (E1...n) empfangenen Störsignale in den vorgegebenen Phasenbereich gebracht werden durch derartige geometrische Anordnung der Sendeeinrichtungen (S1...n) und Empfangseinrichtungen (E1...n), dass die Koeffizienten $c_{i,j}$ der Übertragungsmatrix annähernd die selbe Amplitude haben und, normiert auf die Amplitude, folgendermaßen bestimmt sind:

$$c_{i,j} = \exp\left( j \frac{2\pi}{\lambda} \delta_{i,j} \right),$$

   wobei $\lambda$ die Wellenlänge der Sendesignale ist und $\delta_{i,j}$ der Abstand zwischen der i-ten Sendeeinrichtung und der j-ten Empfangseinrichtung ist und die Abstände $\delta_{i,j}$ Werte haben, bei denen die Determinante **detC** $\neq 0$ ist.

2. Verfahren nach Anspruch 1, **dadurch gekennzeichnet, dass** die Abstände $\delta_{i,j}$ derart bemessen sind, dass bei der gemäß der Kompensationsmatrix D erfolgenden Überlagerung der Empfangssignale (y1...n) für jedes der Nutzsignale (z1...n) alle diejenigen Signalanteile, die aus einer dem betreffenden Nutzsignal individuell zugeordneten Sendeeinrichtung stammen, phasengerecht summiert werden und somit eine Leistungsverstärkung der Nutzsignale erreicht wird.

3. Verfahren nach Anspruch 1 oder 2, **dadurch gekennzeichnet,**

- **dass** bei Anordnung von jeweils zwei Sende- und Empfangseinrichtungen (S1,2, E1,2) die Übertragungseigenschaften der durch die angeordneten Sende- und Empfangseinrichtungen (S1,2, E1,2) gebildeten Übertragungskanäle durch folgende Übertragungsmatrix bestimmt sind

$$C = \begin{bmatrix} e^{j\alpha_{1,1}} & e^{j\alpha_{1,2}} \\ e^{j\alpha_{2,1}} & e^{j\alpha_{2,2}} \end{bmatrix}$$

- und **dass** die Sende- und Empfangseinrichtungen (S1,2, E1,2) in der Art und Weise angeordnet sind, dass folgende Bedingung eingehalten wird:

$$e^{j(\alpha_{1,1}+\alpha_{2,2})} \neq e^{j(\alpha_{1,2}+\alpha_{2,1})} \tag{28}$$

oder äquivalent

$$\alpha_{1,1} + \alpha_{2,2} \neq \alpha_{1,2} + \alpha_{2,1} + 2k\pi \tag{29}$$

wobei k eine ganzzahlige Zahl ist.

4. Verfahren nach Anspruch 3, **dadurch gekennzeichnet, dass** zur Erreichung der Leistungsverstärkung der Nutzsignale (z1,2) die Sende- und Empfangseinrichtungen (S1,2, E1,2) in der Art und Weise angeordnet sind, dass folgende Bedingung erfüllt ist:

$$\alpha_{1,1} + \alpha_{2,2} = \alpha_{1,2} + \alpha_{2,1} + (2k+1)\pi$$

wobei k eine ganzzahlige Zahl ist.

5. Verfahren nach einem der vorherigen Ansprüche, **dadurch gekennzeichnet, dass** über jede der Sendeeinrichtungen (S1...n) jeweils zwei Sendesignale mit jeweils unterschiedlicher orthogonaler Polarisationsebene ausgesendet und über die Empfangseinrichtungen (E1...n) entsprechend empfangen und weiterverarbeitet werden.

6. Verfahren nach einem der vorherigen Ansprüche, **dadurch gekennzeichnet, dass** die Koeffizienten $d_{i,j}$ der Kompensationsmatrix D adaptiv derart eingestellt werden, dass die Störsignale kompensiert werden.

7. Verfahren nach einem der vorherigen Ansprüche, **dadurch gekennzeichnet, dass** jedes der Empfangssignale (y1...n) vor Durchführung der Überlagerung hinsichtlich der Phasenlage jeweils um einen vorgegeben, empfangssignal-individuellen Wert (ϕ) beeinflusst und anschließend die beeinflussten Signale den jeweils anderen Empfangssignalen (y1...n) überlagert werden.

8. Kommunikationsanordnung zum drahtlosen Übermitteln von Informationen über mehrere unabhängige, drahtlose Übertragungskanäle (c11,c22,...,cnn), mit folgenden Einrichtungen:

- Sende- und Empfangseinrichtungen (S1...n, E1...n) zum Übermitteln der Informationen mit Hilfe von wenigstens annähernd die gleiche Trägerfrequenz und wenigstens annähernd die gleiche Polarisationsebene aufweisenden Sendesignalen (x1...n) über zugeordnete Übertragungskanäle (c11, c22, ..., cnn), wobei das Empfangssignal (y1...n) an jeder der Empfangseinrichtungen (E1...n) das über den zugeordneten Übertragungskanal übermittelte Signal und außerdem Anteile der Sendesignale aus den anderen Übertragungskanälen als Störsignale enthält, gemäß der Übertragungsmatrix

$$C = \begin{bmatrix} c_{1,1} & c_{1,2} & \cdots & c_{1,n} \\ c_{2,1} & c_{2,2} & \cdots & c_{2,n} \\ \vdots & \vdots & \ddots & \vdots \\ c_{n,1} & c_{n,2} & \cdots & c_{n,n} \end{bmatrix},$$

worin die Matrixkoeffizienten $c_{i,j}$ mit i=1...n und j=1...n jeweils die Übertragungsfunktion zwischen der i-ten Sendeeinrichtung und der j-ten Empfangseinrichtung darstellen,
- einer den Empfangseinrichtungen (E1...n) zugeordneten Kompensationseinrichtung, die aus den Empfangssignalen (y1...n) Nutzsignale (z1...n) erzeugt, deren jedes aus einer komplex gewichteten Überlagerung eines individuell zugeordneten Empfangssignals mit jeweils allen anderen Empfangssignalen besteht, gemäß einer Kompensationsmatrix

$$D = \begin{bmatrix} d_{1,1} & d_{1,2} & \cdots & d_{1,n} \\ d_{2,1} & d_{2,2} & \cdots & d_{2,n} \\ \vdots & \vdots & \ddots & \vdots \\ d_{n,1} & d_{n,2} & \cdots & d_{n,n} \end{bmatrix},$$

worin die Matrixkoeffizienten $d_{i,j}$ mit i=1...n und j=1...n jeweils die komplexe Gewichtung des i-ten Empfangssignals im j-ten Nutzsignal darstellen und derart eingestellt sind, dass in jedem Nutzsignal nur die empfangenen Störsignale kompensiert oder reduziert sind unter der Bedingung, dass die Störsignale an den Empfangseinrichtungen mit Phasenlagen innerhalb eines gegebenen Phasenbereiches empfangen werden,

**gekennzeichnet durch**

- derartige Ausbildung der Sendeeinrichtungen (S1...n), dass sie die Sendesignale (x1...n) ohne gegenseitige Verknüpfung liefern,
- derartige geometrische Anordnung der Sendeeinrichtungen (S1...n) und Empfangseinrichtungen (E1...n), dass die Koeffizienten $c_{i,j}$ der Übertragungsmatrix annähernd die selbe Amplitude haben und, normiert auf die Amplitude, folgendermaßen bestimmt sind:

$$c_{i,j} = \exp\left( j \frac{2\pi}{\lambda} \delta_{i,j} \right),$$

wobei $\lambda$ die Wellenlänge der Sendesignale ist und $\delta_{i,j}$ der Abstand zwischen der i-ten Sendeeinrichtung und der j-ten Empfangseinrichtung ist und die Abstände $\delta_{i,j}$ Werte haben, bei denen die Determinante **det**$C \neq 0$ ist, so dass die Phasen der an den Empfangseinrichtungen (E1...n) empfangenen Störsignale innerhalb des vorgegebenen Phasenbereiches liegen.

9. Kommunikationsanordnung nach Anspruch 8, **dadurch gekennzeichnet, dass** die Sende- und Empfangseinrichtungen (S1...n, E1...n) geometrisch in der Art und Weise angeordnet sind, dass mit Hilfe der Kompensationsmatrix D die Phasenlagen der empfangenen Signale (y1...n) derart beeinflusst werden, dass die von einer Sendeeinrichtung (S1...n) ausgesendeten und jeweils von den ihr nicht zugeordneten Empfangseinrichtungen (En...1) als Störsignale empfangenen Sendesignale (x1...n) mit dem in der zugeordneten Empfangseinrichtung (E1...n) empfangenen Sendesignal (x1...n) phasengerecht summiert werden und somit eine Leistungsverstärkung der Nutzsignale (z1...n) erreicht wird.

10. Kommunikationsanordnung nach Anspruch 8 oder 9, **dadurch gekennzeichnet, dass** die Sende- und Empfangseinrichtungen (S1...n, E1...n) derart ausgestaltet sind, dass von einer Sendeeinrichtung (S1...n) jeweils zwei Sendesignale mit jeweils unterschiedlicher orthogonaler Polarisationsebene ausgesendet und über die Empfangseinrichtungen (E1...n) entsprechend empfangen und weiterverarbeitet werden.

**11.** Kommunikationsanordnung nach einem der Ansprüche 8 bis 10, **dadurch gekennzeichnet, dass** zwischen den Empfangseinrichtungen (E1...n) und der Kompensationseinrichtung weitere Mittel (PREKOM) zur Beeinflussung der Phasenlage der Empfangssignale (y1...n) jeweils um einen vorgegeben, empfangssignal-individuellen Wert ($\phi$) und zur Überlagerung der beeinflussten Signale mit den jeweils anderen Empfangssignalen (y1...n) und zur Weiterleitung der überlagerten Signale zu der Kompensationseinrichtung (D) angeordnet sind.

**Claims**

**1.** Method for the wireless transmission of information with the aid of a plurality of transmitted signals (x1...n), which are transmitted with at least approximately the same carrier frequency and at least approximately the same polarisation by a plurality of transmitting devices (S1...n) over a plurality of associated wireless transmission channels (c11, c22, ..., cnn) to a plurality of receiving devices (E1...n),

- the received signal (y1...n) at each of the receiving devices (E1...n) containing the signal transmitted over the respectively associated transmission channel and also portions of the transmitted signals from the other transmission channels as interfering signals, in accordance with the transmission matrix:

$$C = \begin{bmatrix} c_{1,1} & c_{1,2} & \cdots & c_{1,n} \\ c_{2,1} & c_{2,2} & \cdots & c_{2,n} \\ \vdots & \vdots & \ddots & \vdots \\ c_{n,1} & c_{n,2} & \cdots & c_{n,n} \end{bmatrix},$$

wherein the matrix coefficients $c_{i,j}$ with i=1...n and j=1...n respectively represent the transmission function between the i-th transmitting device and the j-th receiving device,
- and there being generated from the received signals (y1...n) useful signals (z1...n) which each comprise a complexly weighted superimposition of an individually associated received signal with respectively all the other received signals, according to a compensation matrix

$$D = \begin{bmatrix} d_{1,1} & d_{1,2} & \cdots & d_{1,n} \\ d_{2,1} & d_{2,2} & \cdots & d_{2,n} \\ \vdots & \vdots & \ddots & \vdots \\ d_{n,1} & d_{n,2} & \cdots & d_{n,n} \end{bmatrix},$$

wherein the matrix coefficients $d_{i,j}$ with i=1...n and j=1...n respectively represent the complex weighting of the i-th received signal in the j-th. useful signal and are set in such a way that in each useful signal only the received interfering signals are compensated or reduced, provided that the interfering signals are received at the receiving devices with phase positions within a given phase range,

**characterised in that**

- each of the transmitted signals (x1...n) is transmitted without being combined with the respectively other transmitted signals,
- and **in that** the phase positions of the interfering signals received at the receiving devices (E1...n) are brought into the predetermined phase range by such a geometrical arrangement of the transmitting devices (S1...n) and receiving devices (E1...n) that the coefficients $c_{i,j}$ of the transmission matrix have approximately the same amplitude and, standardized to the amplitude, are determined in the following way:

$$c_{i,j} = \exp\left(j \cdot \frac{2\pi}{\lambda} \delta_{i,j}\right),$$

where $\lambda$ is the wavelength of the transmitted signals and $\delta_{i,j}$ is the distance between the i-th transmitting device and the j-th receiving device and the distances $\delta_{i,j}$ have values in which the determinant is **det$C$** $\neq 0$.

2.  Method according to claim 1, **characterised in that** the distances $\delta_{i,j}$ are of such dimensions that in the superimposition of the received signals (y1...n), taking place according to the compensation matrix D, for each of the useful signals (z1...n) all those signal portions, which originate from a transmitting device individually associated with the relevant useful signal, are added correct to phase and thus a power amplification of the useful signals is achieved.

3.  Method according to claim 1 or 2, **characterised in that**

    -   with an arrangement of two transmitting devices and two receiving devices (S1,2, E1,2), the transmission properties of the transmission channels formed by the arranged transmitting and receiving devices (S1,2, E1,2) are determined by the following transmission matrix

$$C = \begin{bmatrix} e^{j\alpha_{1,1}} & e^{j\alpha_{1,2}} \\ e^{j\alpha_{2,1}} & e^{j\alpha_{2,2}} \end{bmatrix}$$

    -   and **in that** the transmitting and receiving devices (S1,2, E1,2) are arranged in such a way that the following condition is met:

$$e^{j(\alpha_{1,1}+\alpha_{1,2})} \neq e^{j(\alpha_{1,2}+\alpha_{2,1})}$$

or the equivalent:

$$\alpha_{1,1}+\alpha_{2,2} \neq \alpha_{1,2}+\alpha_{2,1} +2k\pi$$

where $k$ is an integer.

4.  Method according to claim 3, **characterised in that**, in order to achieve the power amplification of the useful signals (z1,2), the transmitting and receiving devices (S1,2, E1,2) are arranged in such a way that the following condition is fulfilled:

$$\alpha_{1,1}+\alpha_{2,2} = \alpha_{1,2}+\alpha_{2,1} + (2k+1)\pi$$

where $k$ is an integer.

5.  Method according to one of the preceding claims **characterised in that** via each of the transmitting devices (S1... n) in each case two transmitted signals are transmitted with a respectively different orthogonal polarization plane and are correspondingly received and processed further via the receiving devices (E1...n).

6.  Method according to one of the preceding claims, **characterised in that** the coefficients $d_{i,j}$ of the compensation matrix D are set adaptively in such a way that the interfering signals are compensated.

7.  Method according to one of the preceding claims, **characterised in that** each of the received signals (y1...n), before the superimposition in respect of the phase position has been carried out, is respectively influenced by a predetermined value ($\Phi$), individual to the received signal, and then the influenced signals are superimposed on the respectively other received signals (y1...n).

**8.** Communication arrangement for the wireless transmission of information over a plurality of independent wireless transmission channels (c11,c22,...,cnn), having the following devices:

- transmitting and receiving devices (S1...n, E1...n) for transmitting the information with the aid of transmitted signals (x1...n), which have at least approximately the same carrier frequency and at least approximately the same polarisation plane, over associated transmission channels (c11, c22, ..., cnn), the received signal (y1...n) at each of the receiving devices (E1...n) containing the signal transmitted over the associated transmission channel and also portions of the transmitted signals from the other transmission channels as interfering signals, in accordance with the transmission matrix

$$C = \begin{bmatrix} c_{1,1} & c_{1,2} & \cdots & c_{1,n} \\ c_{2,1} & c_{2,2} & \cdots & c_{2,n} \\ \vdots & \vdots & \ddots & \vdots \\ c_{n,1} & c_{n,2} & \cdots & c_{n,n} \end{bmatrix},$$

wherein the matrix coefficients $c_{i,j}$ with i=1...n and j=1...n respectively represent the transmission function between the i-th transmitting device and the j-th receiving device,
- a compensation device which is associated with the receiving devices (E1...n) and generates from the received signals (y1...n) useful signals (z1...n), each of which comprises a complexly weighted superimposition of an individually associated received signal with respectively all the other received signals, according to a compensation matrix

$$D = \begin{bmatrix} d_{1,1} & d_{1,2} & \cdots & d_{1,n} \\ d_{2,1} & d_{2,2} & \cdots & d_{2,n} \\ \vdots & \vdots & \ddots & \vdots \\ d_{n,1} & d_{n,2} & \cdots & d_{n,n} \end{bmatrix},$$

wherein the matrix coefficients $d_{i,j}$ with i=1...n and j=1...n respectively represent the complex weighting of the i-th received signal in the j-th useful signal and are set in such a way that in each useful signal only the received interfering signals are compensated or reduced, provided that the interfering signals are received at the receiving devices with phase positions within a given phase range,

**characterised by**

- such a configuration of the transmitting devices (S1...n) that they supply the transmitted signals (x1...n) without being mutually combined,
- such a geometrical arrangement of the transmitting devices (S1...n) and receiving devices (E1...n) that the coefficients $c_{i,j}$ of the transmission matrix have approximately the same amplitude and, standardised to the amplitude, are determined in the following way:

$$c_{i,j} = \exp\left( j \frac{2\pi}{\lambda} \delta_{i,j} \right),$$

where λ is the wavelength of the transmitted signals and $\delta_{i,j}$ the distance between the i-th transmitting device and the j-th receiving device, and the distances $\delta_{i,j}$ have values in which the determinant is **det$C$** ≠ 0, such that the phases of the interfering signals received at the receiving devices (E1...n) lie within the predetermined phase range.

**9.** Communication arrangement according to claim 8, **characterised in that** the transmitting and receiving devices (S1...n, E1...n) are geometrically arranged in such a way that, with the aid of the compensation matrix D, the phase positions of the received signals (y1...n) are influenced in such a way that the transmitted signals (x1...n), transmitted from a transmitting device (S1...n) and respectively received as interfering signals by the receiving devices (E1...n), which are not associated with it, are added correct to phase with the transmitted signal (x1...n) received in the associated receiving device (E1...n) and thus a power amplification of the useful signals (z1...n) is achieved.

**10.** Communication arrangement according to claim 8 or 9, **characterised in that** the transmitting and receiving devices (S1...n, E1...n) are so designed that in each case two transmitted signals with a respectively different orthogonal polarisation plane are transmitted by a transmitting device (S1...n) and are correspondingly received and processed further via the receiving devices (E1...n).

**11.** Communication arrangement according to one of claims 8 to 10, **characterised in that** between the receiving devices (E1...n) and the compensation device are arranged additional means (PREKOM) for influencing the phase position of the received signals (y1...n) each by a predetermined value (Φ) individual to the received signal and for superimposing the influenced signals with the respectively other received signals (y1...n) and for passing the superimposed signals on to the compensation device (D).

**Revendications**

**1.** Procédé pour la transmission de données sans fil à l'aide de plusieurs signaux d'émission (x1...n), qui sont envoyés avec au moins approximativement la même fréquence de porteuse et au moins approximativement la même polarisation à travers plusieurs canaux de transmission sans fil associés (c11, c22, ..., cnn), à partir de plusieurs dispositifs d'émission (S1...n) vers plusieurs dispositifs de réception (E1...n),

- dans lequel le signal de réception (yl...n) au niveau de chaque dispositif de réception (E1...n) comprend le signal transmis sur le canal de transmission associé et en plus, des parties des signaux d'émission provenant des autres canaux de transmission en tant que signaux parasites, selon la matrice de transmission

$$C = \begin{bmatrix} C_{1,1} & C_{1,2} & \cdots & C_{1,n} \\ C_{2,1} & C_{2,2} & \cdots & C_{2,n} \\ \vdots & \vdots & \ddots & \vdots \\ C_{n,1} & C_{n,2} & \cdots & C_{n,n} \end{bmatrix},$$

dans laquelle les coefficients de matrice $C_{i,j}$, avec i = 1...n et j = 1...n, représentent chacun la fonction de transmission entre le i-ème dispositif d'émission et le j-ème dispositif de réception,
- et dans lequel on peut créer, à partir des signaux de réception (y1...n), des signaux utiles (z1...n), dont chacun consiste en une superposition complexe pondérée d'un signal de réception associé individuellement avec tous les autres signaux de réception, selon une matrice de compensation

$$D = \begin{bmatrix} d_{1,1} & d_{i,2} & \cdots & d_{1,n} \\ d_{2,1} & d_{2,2} & \cdots & d_{2,n} \\ \vdots & \vdots & \ddots & \vdots \\ d_{n,1} & d_{n,2} & \cdots & d_{n,n} \end{bmatrix},$$

dans laquelle les coefficients de matrice $d_{i,j}$, avec i = 1...n et j = 1...n, représentent la pondération complexe du i-ème signal de réception présent dans le j-ème signal utile, et ils sont réglés de façon à ce que seuls les signaux parasites reçus dans chaque signal utile soient compensés ou réduits, à condition que les signaux parasites soient reçus au niveau des dispositifs de réception en présentant une phase se trouvant dans un domaine de phase donné,

**caractérisé en ce que**

- chacun des signaux d'émission (x1...n) est envoyé sans être lié aux autres signaux d'émission,

- les phases des signaux parasites reçus au niveau des dispositifs de réception (E1...n) sont ramenées dans le domaine de phase prédéfini par une disposition géométrique des dispositifs d'émission (S1...n) et des dispositifs de réception (E1...n) qui est telle que les coefficients $c_{i,j}$ de la matrice de transmission présentent approximativement la même amplitude et, normalisés en amplitude, sont déterminés de la manière suivante :

$$C_{i,j} = \exp\left( j\frac{2\pi}{\lambda} \delta_{i,j} \right),$$

où $\lambda$ représente la longueur d'onde du signal d'émission et $\delta i,j$ la distance entre le i-ème dispositif d'émission et le j-ème dispositif de réception et les distances $\delta i,j$ présentent des valeurs pour lesquelles le déterminant est det C $\neq$ 0.

2. Procédé selon la revendication 1, **caractérisé en ce que** les distances $\delta i$, sont mesurées de façon à ce que, lors de la superposition des signaux de réception (y1...n) s'effectuant selon la matrice de compensation D, pour chacun des signaux utiles (z1...n), toutes ces parties de signaux, qui proviennent d'un dispositif d'émission associé individuellement au signal utile concerné, soient sommées en phase et on obtient par conséquent une amplification en puissance du signal utile.

3. Procédé selon la revendication 1 ou 2, **caractérisé en ce que**

- dans un système comportant deux dispositifs d'émission et deux de réception (S1,2, E1,2), les caractéristiques de transmission des canaux de transmission formés par les dispositifs d'émission et de réception (S1,2, E1,2) disposés sont déterminés par la matrice de transmission suivante

$$C = \begin{bmatrix} e^{j\alpha^{1,1}} & e^{j\alpha^{1,2}} \\ e^{j\alpha^{2,1}} & e^{j\alpha^{2,2}} \end{bmatrix},$$

- et que les dispositifs d'émission et de réception (S1,2, E1,2) sont disposés de manière à ce que la condition suivante soit respectée :

$$e^{j(\alpha_{1,1}+\alpha_{2,2})} \neq e^{j(\alpha_{1,2}+\alpha_{2,2})}$$

ou de manière équivalente :

$$\alpha_{1,1} + \alpha_{2,2} \neq \alpha_{1,2} + \alpha_{2,1} + 2k\pi$$

où k est un nombre entier,

4. Procédé selon la revendication 3, **caractérisé en ce que** pour obtenir l'amplification en puissance des signaux utiles (z1,2), les dispositifs d'émission et de réception (S1,2, E1,2) sont disposés de manière à ce que la condition

suivante soit remplie :

$$\alpha_{1,1} + \alpha_{2,2} = \alpha_{1,2} + \alpha_{2,1} + (2k+1)\pi$$

où k est un nombre entier.

5. Procédé selon l'une quelconque des revendications précédentes, **caractérisé en ce que** deux signaux d'émission présentant chacun des plans de polarisation orthogonaux différents sont envoyés par chacun des dispositifs d'émission (S1...n), et sont reçus de manière correspondante par les dispositifs de réception (E1....n), et sont traités.

6. Procédé selon l'une quelconque des revendications précédentes, **caractérisé en ce que** les coefficients $d_{i,j}$ de la matrice de compensation D sont réglés de manière adaptative de façon à ce que les signaux parasites soient compensés.

7. Procédé selon l'une quelconque des revendications précédentes, **caractérisé en ce que** chacun des signaux de réception (y1...n) est modifié au niveau de la phase d'une valeur (Φ) prédéterminée, propre au signal de réception, avant d'effectuer la superposition et ensuite les signaux modifiés sont superposés à tous les autres signaux de réception (y1...n).

8. Système de communication pour la transmission de données sans fil sur plusieurs canaux de transmission (c11, c22,...cnn) indépendants sans fil, comportant les dispositifs suivants :

- les dispositifs d'émission et de réception (S1...n, E1...n) pour la transmission des données à l'aide de signaux d'émission (x1...n) présentant au moins approximativement la même fréquence de porteuse et au moins approximativement le même plan de polarisation, sur des canaux de transmission associés (c11, c22,...cnn), dans lequel le signal de réception (y1...n) au niveau de chacun des dispositifs de réception (E1...n) contient le signal transmis sur le canal de transmission associé et en plus des parties des signaux d'émission provenant des autres canaux de transmission en tant que signaux parasites, selon la matrice de transmission

$$C = \begin{bmatrix} C_{1,1} & C_{1,2} & \cdots & C_{1,n} \\ C_{2,1} & C_{2,2} & \cdots & C_{2,n} \\ \vdots & \vdots & \ddots & \vdots \\ C_{n,1} & C_{n,2} & \cdots & C_{n,n} \end{bmatrix},$$

dans laquelle les coefficients de matrice $c_{i,j}$, avec i = 1...n et j = 1...n, représentent chacun la fonction de transmission entre le i-ème dispositif d'émission et le j-ème dispositif de réception,
- un dispositif de compensation associé aux dispositifs de réception (E1...n), qui crée des signaux utiles (z1...n) à partir des signaux de réception (y1...n), chacun consistant en une superposition complexe pondérée d'un signal de réception individuellement associé avec tous les autres signaux de réception, selon une matrice de compensation

$$D = \begin{bmatrix} d_{1,1} & d_{1,2} & \cdots & d_{1,n} \\ d_{2,1} & d_{2,2} & \cdots & d_{2,n} \\ \vdots & \vdots & \ddots & \vdots \\ d_{n,1} & d_{n,2} & \cdots & d_{n,n} \end{bmatrix},$$

dans laquelle les coefficients de matrice $d_{i,j}$, avec i = 1...n et j = 1...n, représentent la pondération complexe du i-ème signal de réception présent dans le j-ème signal utile, et ils sont réglés de façon à ce que, dans chaque signal utile, seuls les signaux parasites reçus soient compensés ou réduits, à condition que les signaux parasites soient reçus au niveau des dispositifs de réception avec une phase comprise dans un domaine de phase donné,

**caractérisé par**,

- ce type de variante des dispositifs d'émission (S1..n), en ce qu'ils fournissent des signaux d'émission (x1...n) sans liaison mutuelle,

- ce type de disposition géométrique des dispositifs d'émission (S1...n) et des dispositifs de réception (E1...n), en ce que les coefficients $c_{i,j}$ de la matrice de transmission présentent approximativement la même amplitude et, normalisés en amplitude, sont déterminés de la façon suivante :

$$c_{i,j} = \exp\left( j\frac{2\pi}{\lambda} \delta_{i,j} \right)$$

où $\lambda$ représente la longueur d'onde du signal d'émission et $\delta_{i,j}$ la distance entre le i-ème dispositif d'émission et le j-ème dispositif de réception et les distances $\delta_{i,j}$ présentent des valeurs pour lesquelles le déterminant det $C \neq 0$, de façon à ce que les phases des signaux parasites reçus au niveau des dispositifs de réception (E1...n) se trouvent dans un domaine de phase prédéterminé.

9. Système de communication selon la revendication 8, **caractérisé en ce que** les dispositifs d'émission et de réception (S1...n, E1...n) sont disposés géométriquement de manière à ce que, à l'aide de la matrice de compensation D, les phases des signaux reçus (y1...n) soient transformées de façon à ce que les signaux d'émission (x1...n) envoyés par un dispositif d'émission (S1...n) et reçus par tous les dispositifs de réception qui ne lui sont pas associés (En... 1) en tant que signaux parasites soient sommés en phase avec le signal de réception (x1...n) dans le dispositif de réception associé (E1...n) et on obtient ainsi une amplification en puissance du signal utile (z1...n).

10. Système de communication selon la revendication 8 ou 9, **caractérisé en ce que** les dispositifs d'émission et de réception (S1...n, E1...n) sont configurés de manière à ce que deux signaux d'émission présentant des plans de polarisation orthogonaux différents soient envoyés par un dispositif d'émission (S1..n) et reçus de manière correspondante par les dispositifs de réception (E1...n), et soient traités.

11. Système de communication selon l'une quelconque des revendications 8 à 10, **caractérisé en ce que** entre les dispositifs de réception (E1...n) et le dispositif de compensation, d'autres moyens (PREKOM) sont disposés pour modifier la phase des signaux de réception (y1...n) d'une valeur ($\Phi$) prédéterminée, propre au signal reçu, et pour superposer les signaux modifiés avec tous les autres signaux de réception (y1...n), et pour transmettre les signaux superposés au dispositif de compensation (D).

FIG 1

**FIG 2**

**FIG 3**

FIG 4

$$d\,[m] = f(l, f)$$

FIG 5

**FIG 6**

f = 15 GHz, l = 5000 m

**FIG 7**

FIG 8

FIG 9

FIG 10